# EUROPEAN PATENT APPLICATION

(11) **EP 4 852 520 A1**
(43) Date of publication of application: **09.12.2026**
(21) Application number: 25757611.6
(22) Date of filing: 27.01.2025
(51) Int. Cl.: H04W 36/00

(54) **COMMUNICATION METHOD, AND APPARATUS AND SYSTEM**

(30) Priority: 19.02.2024 CN 202410188824
(71) Applicant: HUAWEI TECHNOLOGIES CO., LTD., Shenzhen, Guangdong 518129 (CN)
(72) Inventor: HU, Yajie, Shenzhen, Guangdong 518129 (CN); GE, Cuili, Shenzhen, Guangdong 518129 (CN)
(74) Representative: Huawei European IPR
(86) International application number: PCT/CN2025/075440
(87) International publication number: WO 2025/176014

(57) **Abstract**

This application provides a communication method, apparatus, and system. The method includes: determining a first edge application server EAS association group based on first information corresponding to at least one EAS, where the at least one EAS includes an EAS deployed on a satellite, the at least one EAS includes an EAS in the first EAS association group, and the first information of each EAS deployed on the satellite indicates connection information of the satellite corresponding to the EAS; and sending the first EAS association group. This can effectively reduce a possibility of service interruption in a scenario in which the EAS is deployed on the satellite.

## Description

This application claims priority to Chinese Patent Application No. 202410188824.X, filed with the China National Intellectual Property Administration on February 19, 2024 and entitled "COMMUNICATION METHOD, APPARATUS, AND SYSTEM", which is incorporated herein by reference in its entirety.

### TECHNICAL FIELD

This application relates to the communication field, and in particular, to a communication method, apparatus, and system.

### BACKGROUND

In the communication field, the SA6 standard of the 3rd Generation Partnership Project (3rd generation partnership project, 3GPP) defines discovery of an edge enabler server (edge enabler server, EES) platform and a discovery procedure for an edge application server (edge application server, EAS). The procedure provides EES platform discovery and application instance discovery at an application layer. In the current edge computing technology, an application deployed in an edge data network (edge data network, EDN) may be referred to as an application instance. In the discovery procedure, an EES serves as a local domain name system server (local domain name system server, local DNS server), and user equipment (user equipment, UE) obtains an address of the application instance from a multi-access edge computing (multi-access edge computing, MEC) platform. In other words, when discovering the EAS, the UE may first discover the EES platform, and then discover the EAS from the EES platform.

In a scenario in which the EAS is deployed on a satellite, the discovery procedure of the EAS causes service interruption. Therefore, how to mitigate the service interruption becomes a problem to be resolved.

### SUMMARY

This application provides a communication method, apparatus, and system, to effectively reduce a possibility of service interruption in a scenario in which an EAS is deployed on a satellite.

According to a first aspect, this application provides a communication method. The method may be implemented by an EES or a component in the EES, and the component is, for example, at least one of a processor, a transceiver, a processing module, or a transceiver module. For example, the method is implemented by the EES. The method includes: determining a first EAS association group based on first information corresponding to at least one EAS, where the at least one EAS includes an EAS deployed on a satellite, the at least one EAS includes an EAS in the first EAS association group, and the first information of each EAS deployed on the satellite indicates connection information of the satellite corresponding to the EAS; and sending the first EAS association group.

According to the communication method in this application, the EES can obtain the first EAS association group based on the first information of the EAS, and provide the first EAS association group to UE. This enables the UE to determine, based on the first EAS association group, an EAS that can be subsequently connected, thereby avoiding repeated execution of an EAS discovery procedure. In a scenario in which the EAS is deployed on the satellite, a handover operation between EAS connections occurs more frequently due to satellite mobility. Therefore, discovering the EAS by using the communication method provided in this application can effectively reduce service interruption caused by the UE repeatedly performing the EAS discovery procedure.

The first information of each EAS deployed on the satellite indicates the connection information of the corresponding satellite. In this application, the satellite and the EAS deployed on the satellite are defined as the corresponding satellite and EAS.

In a possible implementation, the connection information indicates connectivity information of the satellite in terms of time; or the connection information indicates connectivity information of the satellite in terms of space; or the connection information indicates connectivity information of the satellite in terms of time and space. The connectivity information in terms of space may be connectivity information of a location to which the satellite is mapped on a ground, for example, connectivity information of the satellite in a specific country, a specific province or city area, or a specific street, or alternatively, connectivity information of the satellite in a specific operator network or the like.

The EES can obtain, in a plurality of manners, the first information corresponding to the at least one EAS. For example, the EES obtains the first information based on connection information with the EES sent by the EAS, or the EES obtains the first information based on obtained connection information of the satellite on which the EAS is deployed. This application provides methods for the EES to obtain the first information of the EAS through the following three possible implementations.

In a possible implementation, the method further includes: receiving a first request message sent by a first EAS, where the at least one EAS includes the first EAS, and the first request message carries first information of the first EAS; and obtaining the first information of the first EAS based on the first request message. In this method, the first information of each EAS can be determined based on the received first information of each EAS. This simplifies processing by the EES and reduces overheads for the EES to obtain the first information of the EAS.

In a possible implementation, the method further includes: receiving a first request message sent by a first EAS, where the first EAS is an EAS deployed on a first satellite among the at least one EAS, and the first request message carries at least one of a satellite identifier or connection information of the first satellite; obtaining a satellite association group, where the satellite association group includes second information corresponding to at least one satellite, the second information indicates at least one of a corresponding satellite identifier or connection information, and the at least one satellite includes the first satellite; and determining first information of the first EAS based on the first request message of the first EAS and the second information of the first satellite. In this method, the EES may first determine, based on the satellite identifier, an EAS corresponding to the satellite identifier. For example, if the first satellite corresponds to the first EAS, the EES may determine connection information of the EAS based on the connection information of the first satellite, and so forth, so that the EES can determine the first information of each EAS. This provides more diverse implementations for the EES to obtain the first information of the EAS, thereby broadening applicable scenarios of the communication method.

In a possible implementation, the method further includes: receiving a first request message sent by a first EAS, where the first EAS is an EAS deployed on a first satellite among the at least one EAS, and the first request message carries second information of the first satellite; and determining first information of the first EAS based on the second information of the first satellite. In this method, a satellite identifier corresponding to the EAS and a connection status of the satellite are determined based on the second information of the satellite, thereby determining the first information of each EAS. This provides more diverse implementations for obtaining the first information of the EAS. In this method, the EES may determine the identifier of the satellite, the second information of the satellite, and the EAS, and determine the first information of the EAS based on a correspondence among the three. This also provides more diverse implementations for the EES to obtain the first information of the EAS, thereby broadening applicable scenarios of the communication method.

According to a second aspect, this application provides a communication method. The method may be implemented by an EES or a component in the EES, and the component is, for example, at least one of a processor, a transceiver, a processing module, or a transceiver module. For example, the method is implemented by the EES. The method includes: determining a first EAS association group based on first information corresponding to at least one EAS, where the at least one EAS includes an EAS deployed on a satellite, the at least one EAS includes an EAS in the first EAS association group, and the first information of each EAS deployed on the satellite indicates connection information of the satellite corresponding to the EAS; receiving a second request message, where the second request message carries application information; determining a second EAS association group based on the application information and the first EAS association group; and sending the second EAS association group.

When an EAS association group is provided for UE, content included in the second EAS association group may be further determined from the first EAS association group according to a requirement of the UE, so that the provided second EAS association group better aligns with the requirement of the UE.

The first information of each EAS deployed on the satellite indicates the connection information of the corresponding satellite. In this application, the satellite and the EAS deployed on the satellite are defined as the corresponding satellite and EAS.

In a possible implementation, the connection information indicates connectivity information of the satellite in terms of time; or the connection information indicates connectivity information of the satellite in terms of space; or the connection information indicates connectivity information of the satellite in terms of time and space. The connectivity information in terms of space may be connectivity information of a location to which the satellite is mapped on a ground, for example, connectivity information of the satellite in a specific country, a specific province or city area, or a specific street, or alternatively, connectivity information of the satellite in a specific operator network or the like.

The EES can obtain, in a plurality of manners, the first information corresponding to the at least one EAS. For example, the EES obtains the first information based on connection information with the EES sent by the EAS, or the EES obtains the first information based on obtained connection information of the satellite on which the EAS is deployed. This application provides methods for the EES to obtain the first information of the EAS through the following three possible implementations.

In a possible implementation, the method further includes: receiving a first request message sent by a first EAS, where the at least one EAS includes the first EAS, and the first request message carries first information of the first EAS; and obtaining the first information of the first EAS based on the first request message. In this method, the first information of each EAS can be determined based on the received first information of each EAS. This simplifies processing by the EES and reduces overheads for the EES to obtain the first information of the EAS.

In a possible implementation, the method further includes: receiving a first request message sent by a first EAS, where the first EAS is an EAS deployed on a first satellite among the at least one EAS, and the first request message carries at least one of a satellite identifier or connection information of the first satellite; obtaining a satellite association group, where the satellite association group includes second information corresponding to at least one satellite, the second information indicates at least one of a corresponding satellite identifier or connection information, and the at least one satellite includes the first satellite; and determining first information of the first EAS based on the first request message of the first EAS and the second information of the first satellite. In this method, the EES may first determine, based on the satellite identifier, an EAS corresponding to the satellite identifier. For example, if the first satellite corresponds to the first EAS, the EES may determine connection information of the EAS based on the connection information of the first satellite, and so forth, so that the EES can determine the first information of each EAS. This provides more diverse implementations for the EES to obtain the first information of the EAS, thereby broadening applicable scenarios of the communication method.

In a possible implementation, the method further includes: receiving a first request message sent by a first EAS, where the first EAS is an EAS deployed on a first satellite among the at least one EAS, and the first request message carries second information of the first satellite; and determining first information of the first EAS based on the second information of the first satellite. In this method, a satellite identifier corresponding to the EAS and a connection status of the satellite are determined based on the second information of the satellite, thereby determining the first information of each EAS. This provides more diverse implementations for obtaining the first information of the EAS. In this method, the EES may determine the identifier of the satellite, the second information of the satellite, and the EAS, and determine the first information of the EAS based on a correspondence among the three. This also provides more diverse implementations for the EES to obtain the first information of the EAS, thereby broadening applicable scenarios of the communication method.

In a possible implementation, the application information corresponds to an EAS; and determining the second EAS association group based on the application information and the first EAS association group, and sending the second EAS association group include: determining the second EAS association group from the first EAS association group based on the EAS corresponding to the application information; and sending a response message, where the response message includes the second EAS association group.

In a possible implementation, the method further includes: the second request message further includes first location information, the first location information includes at least one piece of location information of UE, and the at least one piece of location information includes current location information of the UE or at least one piece of predicted location information of the UE, where location information includes at least one of a location or a time corresponding to the location; and determining the second EAS association group based on the application information and the first EAS association group includes: determining the second EAS association group based on the application information, the first location information, and the first EAS association group.

In a possible implementation, the method further includes: if the at least one piece of location information includes a current location of the UE, the response message further indicates, in the second EAS association group, an EAS to be accessed by the UE at the current location; or if the at least one piece of location information includes the at least one piece of predicted location information of the UE, and the predicted location information includes a predicted location and a predicted time corresponding to the predicted location, the response message indicates, in the second EAS association group, an EAS to be accessed by the UE at each predicted location and at the predicted time corresponding to the predicted location.

The EES may provide the first EAS association group to the UE in two manners. In one manner, when the UE provides the first location information, the EES may indicate, to the UE, a corresponding EAS to be accessed in the first location information. For example, if the EES obtains the current location of the UE, the EES may indicate the EAS to be accessed by the UE at the current location. Alternatively, if the EES obtains the predicted location of the UE, for example, an initial location, the EES may indicate an EAS to be accessed by the UE at the initial location. Optionally, if the first location information further includes a time corresponding to the initial location, the EES may indicate that the UE accesses the EAS to be accessed at the initial location at the time. In a possible implementation, if the at least one piece of location information includes the current location information of the UE, the response message further indicates, in the first EAS association group, an EAS to be accessed by the UE at the current location. If the at least one piece of location information includes the at least one piece of predicted location information of the UE, the response message further indicates, in the first EAS association group, an EAS to be accessed by the UE at each piece of predicted location information. In the other manner, after the EES sends the first EAS association group to the UE, the UE determines an EAS to be accessed based on the first location information. According to the communication method provided in this application, different response messages are sent to the UE, and the UE determines the EAS to be accessed based on an indication or autonomously, so that a method for discovering the EAS can be more flexible.

In a possible implementation, the method further includes: the EES may provide a second EAS association group to the UE, for example, send a response message to the UE, where the response message carries the second EAS association group. In this case, after receiving the second EAS association group, the UE may determine the EAS to be accessed, so that a method for discovering the EAS can be more flexible.

In a possible implementation, the method further includes: the EES may provide all EASs that can connect to the UE, and the UE determines the first EAS association group or the second EAS association group according to a requirement. This can reduce operations performed by the EES, reduce overheads of the EES, and make a method for discovering the EAS more flexible.

It should be understood that the technical solutions in the second aspect of this application correspond to the technical solutions in the first aspect of this application, and beneficial effects achieved by the aspects and the corresponding feasible implementations are similar. Details are not described herein again.

According to a third aspect, this application provides a communication method, and the method may be implemented by an EAS. For example, the method is implemented by any EAS denoted as a first EAS. The method includes: sending a first request message to an EES.

In a possible implementation, the first request message carries first information of a first EAS, and the first information indicates connection information of a first satellite corresponding to the first EAS.

In a possible implementation, the first request message carries at least one of a satellite identifier or connection information of a first satellite, and a first EAS is deployed on the first satellite.

In a possible implementation, the connection information indicates connectivity information of the satellite in terms of time; or the connection information indicates connectivity information of the satellite EAS in terms of space; or the connection information indicates connectivity information of the satellite in terms of time and space.

In a possible implementation, the method further includes: determining an EES association group associated with the first EAS; and
sending the first request message to at least one EES in the EES association group.

It should be understood that the technical solutions in the third aspect of this application correspond to the technical solutions in the first aspect of this application, and beneficial effects achieved by the aspects and the corresponding feasible implementations are similar. Details are not described herein again.

According to a fourth aspect, this application provides a communication method. The method may be implemented by UE or a component in the UE, and the component is at least one of a processor, a transceiver, a processing module, or a transceiver module. For example, the method is implemented by UE. The method includes: receiving an EAS association group sent by an EES, where the EAS association group includes a first EAS association group or a second EAS association group.

In a possible implementation, the method further includes: sending a second request message to the EES, where the second request message carries application information.

In a possible implementation, the method further includes: sending a second request message to the EES, where the second request message carries application information and first location information, the first location information includes at least one piece of location information of the UE, and the at least one piece of location information includes current location information of the UE or at least one piece of predicted location information of the UE, where location information includes at least one of a location or a time corresponding to the location.

In a possible implementation, the method further includes: receiving the edge application server EAS association group sent by the edge enabler server EES includes: receiving a response message, where the response message carries the first EAS association group; and the method further includes: determining, based on the first EAS association group, the application information of the UE, and the first location information of the UE, at least one EAS to be accessed.

In a possible implementation, the method further includes: receiving the edge application server EAS association group sent by the edge enabler server EES includes: receiving a response message, where the response message carries the second EAS association group; and the method further includes: determining, based on the second EAS association group and the first location information of the UE, at least one EAS to be accessed.

In a possible implementation, the method further includes: receiving the edge application server EAS association group sent by the edge enabler server EES includes: receiving a response message, where the response message carries the second EAS association group, and indicates, in the second EAS association group, an EAS to be accessed by the UE at a current location.

In a possible implementation, the method further includes: receiving the edge application server EAS association group sent by the edge enabler server EES includes: receiving a response message, where the response message carries the second EAS association group, and indicates, in the second EAS association group, an EAS to be accessed by the UE at each predicted location and at a predicted time corresponding to the predicted location.

It should be understood that the technical solutions in the fourth aspect of this application correspond to the technical solutions in the first aspect of this application, and beneficial effects achieved by the aspects and the corresponding feasible implementations are similar. Details are not described herein again.

According to a fifth aspect, this application provides a communication apparatus. The apparatus includes a transceiver module and a processing module, and can implement the communication method in the first aspect.

According to a sixth aspect, this application provides a communication apparatus. The apparatus includes a transceiver module and a processing module, and can implement the communication method in the second aspect.

According to a seventh aspect, this application provides a communication apparatus. The apparatus includes a transceiver module and a processing module, and can implement the communication method in the third aspect.

According to an eighth aspect, this application provides a communication apparatus. The apparatus includes a transceiver module and a processing module, and can implement the communication method in the fourth aspect.

According to a ninth aspect, this application provides a communication apparatus. The apparatus includes at least one processor, and the at least one processor is coupled to a storage medium. The storage medium stores instructions. When the instructions are run by the processor, the processor is configured to perform the method according to any one of the foregoing aspects or any possible implementation of any one of the foregoing aspects. The storage medium may be included in the apparatus, or may be located outside the apparatus.

According to a tenth aspect, this application provides a computer-readable storage medium. The computer-readable storage medium stores a computer program. When the computer program is executed by a processor, the method according to any one of the foregoing aspects or any possible implementation of any one of the foregoing aspects is implemented.

According to an eleventh aspect, this application provides a computer program product. The computer program product includes instructions. When the instructions are run on a processor, the method according to any one of the foregoing aspects or any possible implementation of any one of the foregoing aspects is implemented.

According to a twelfth aspect, this application provides a chip, including a port circuit and a processor. The port circuit is connected to the processor. The processor is configured to cause the chip to perform the method according to any one of the foregoing aspects and some or all operations included in any possible implementation of any one of the foregoing aspects.

According to a thirteenth aspect, this application provides a system. The system includes at least one of the fifth aspect to the twelfth aspect.

It should be understood that the technical solutions in the fifth aspect to the twelfth aspect of this application are consistent with or correspond to the technical solutions in the first aspect, the second aspect, or the third aspect of this application, and beneficial effects achieved by the aspects and the corresponding feasible implementations are similar. Details are not described herein again.

### BRIEF DESCRIPTION OF DRAWINGS

To describe the technical solutions in embodiments of this application more clearly, the following briefly describes the accompanying drawings for describing embodiments of this application. Apparently, the accompanying drawings in the following description show merely some embodiments of this application, and a person of ordinary skill in the art may still derive other drawings from these accompanying drawings without creative efforts.
FIG. 1 is a diagram of a network architecture according to an embodiment of this application;
FIG. 2 is a diagram of a structure of a communication system according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of an EAS discovery method according to an embodiment of this application;
FIG. 11 is a diagram of a structure of an EES or an apparatus in the EES according to an embodiment of this application;
FIG. 12 is a diagram of a structure of another EES or an apparatus in the EES according to an embodiment of this application;
FIG. 13 is a diagram of a structure of a first EAS or an apparatus in the first EAS according to an embodiment of this application;
FIG. 14 is a diagram of a structure of UE or an apparatus in the UE according to an embodiment of this application;
FIG. 15 is a diagram of a structure of a device 60 according to an embodiment of this application; and
FIG. 16 is a diagram of a structure of a device 70 according to an embodiment of this application.

### DESCRIPTION OF EMBODIMENTS

To make a person skilled in the art understand the technical solutions in this application better, the following clearly and completely describes the technical solutions in embodiments of this application with reference to the accompanying drawings in embodiments of this application. It is clear that the described embodiments are merely some rather than all of embodiments of this application.

The term "and/or" in this specification describes only an association relationship between associated objects and represents that three relationships may exist. For example, A and/or B may represent the following three cases: Only A exists, both A and B exist, and only B exists, where A and B may be singular or plural. "At least one of the following" or a similar expression thereof represents any combination of listed items. For example, at least one of A, B, and (or) C may represent the following cases: Only A exists, only B exists, only C exists, both A and B exist, both B and C exist, both A and C exist, and A, B, and C exist, where A, B, and C may be singular or plural.

In the specification and claims in embodiments of this application, the terms "first", "second", and so on are intended to distinguish between different objects but do not indicate a particular order of the objects. For example, a first target object, a second target object, and the like are used for distinguishing between different target objects, but are not used for describing a specific order of the target objects.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the words such as "example" or "for example" is intended to present a relative concept in a specific manner.

In descriptions of embodiments of this application, unless otherwise stated, "plurality of" means two or more than two. For example, a plurality of processing units mean two or more processing units, and a plurality of systems mean two or more systems.

For ease of understanding, the following first explains and describes related nouns or terms used in embodiments of this application.

### 1. EDN

The EDN is a general understanding. In one understanding, the EDN includes only one data network, namely, a local data network (local data network, local DN), and includes an edge enabler function. The EDN may use a data network access identifier (data network access identifier, DNAI) and a data network name (also referred to as an application instance or an edge application) identifier, and is a network logical concept. In another understanding, the EDN is a peer concept of a central cloud, and may be understood as a local data center (a geographical location concept). The EDN may be identified by using a DNAI, and may include a plurality of local data networks.

### 2. Application instance (edge application)

The application instance is an application deployed in the edge data network, and may be specifically an application program of a server (for example, social media software, augmented reality (augmented reality, AR), or virtual reality (virtual reality, VR)), or an instance (instance) deployed and running in the EDN. One or more EASs may be deployed in one or more EDNs for one application instance. EASs deployed and running in different EDNs may be considered as different EASs of one application instance. The EASs may share one domain name, may use one IP address, or may use different Internet Protocol (internet protocol, IP) addresses. Optionally, the EAS may also be referred to as an edge application (server), an application instance, an edge application instance, an MEC application (server), an EAS function, or the like.

### 3. Application client (application client, AC)

The application client is a peer entity of the edge application on a UE side. The application client is used by an application user (user) to obtain an application service from an application server. The application client is a client program of an application on the terminal side. The application client may connect to an application server on a cloud to obtain application services, or may connect to an EAS deployed and running in one or more EDNs to obtain application services.

### 4. EES

The EES may provide some enabler capabilities for application instances deployed in the EDN, and support deployment of an application in an MEC. The EES may support registration of edge applications, authentication and authorization for UE, provide IP address information of the application instances for the UE, and the like. The EES may further support obtaining an identifier and IP address information of the application instance, and further send the identifier and the IP address information of the application instance to an edge data network configuration server. The EES is deployed in the EDN. Generally, the EAS is registered with an EES, or information about the EAS is configured on the EES through a management system. The EES is referred to as an EES associated with the EAS. The EES controls and manages the EAS registered with or configured in the EES.

### 5. Edge enabler client (edge enabler client, EEC)

The edge enabler client is a peer entity of the EES on the UE side. The EEC is configured to register information about the EEC and information about the application client with the EES, perform security authentication and authorization, obtain an IP address of the EAS from the EES, and provide an edge computing enabling capacity for the application client. For example, the EEC uses an EAS discovery service to return the IP address of the EAS to the application client.

### 6. Edge configuration server (edge configuration server, ECS)

The edge configuration server is responsible for configuration of the EDN, for example, provides information about the EES to the UE. Alternatively, the edge configuration server may directly provide the information about the application instance to the UE, and obtain the information about the application instance by interacting with the DNS of the application. Further, the information about the application instance and the IP address is obtained from another functional entity and stored.

The application user signs a service agreement with a provider of an application, to provide a service for the application user. The application user logs in to the application client on the terminal, and performs communication through a connection between the application client and the EAS. The enabler client is a middleware layer, and is usually located in an operating system, or is located between the application client and the operating system. The application client may obtain an edge enabler service from the enabler client through an application programming interface (application programming interface, API).

### 7. EES associated with the EAS

The EAS is registered with an EES, or information about the EAS is configured on the EES through a management system. The EES is referred to as an EES associated with the EAS.

### 8. EAS discovery procedure

Typically, the UE, such as an EEC in the UE, needs to discover the EES from the ECS, and then the EEC discovers the EAS from the EES. In an example, discovering the EES from the ECS includes: the EEC requests or subscribes to an EES corresponding to a location of the UE from the ECS, and the EEC discovers an EES enabler platform or an EDN of interest from the ECS. The ECS holds detailed information about the application instance, obtains a DNAI based on the location of the UE, and selects an appropriate EES for each application based on the DNAI, a fully qualified domain name (fully qualified domain name, FQDN), and an EES profile. When a platform is selected, the location of the UE and another optional filter (filter) are taken into account. A current or potential DNAI is obtained. The EEC obtains information about one or more EESs from the ECS. The EEC then discovers the EAS from the EES with reference to the following: When the EEC initially discovers the EES, an application to be accessed is specified. The EES matches information about the registered application. The EES matches an edge application instance that satisfies a request of the user based on information about the locally registered or online edge application instance and discovery filtering parameters provided by the user. If a plurality of edge application instances satisfy the request of the user, the plurality of edge application instances are returned. The EES returns the information about the EAS to the EEC. In this way, the EEC can then provide it to the application client for the client to connect to the edge application instance.

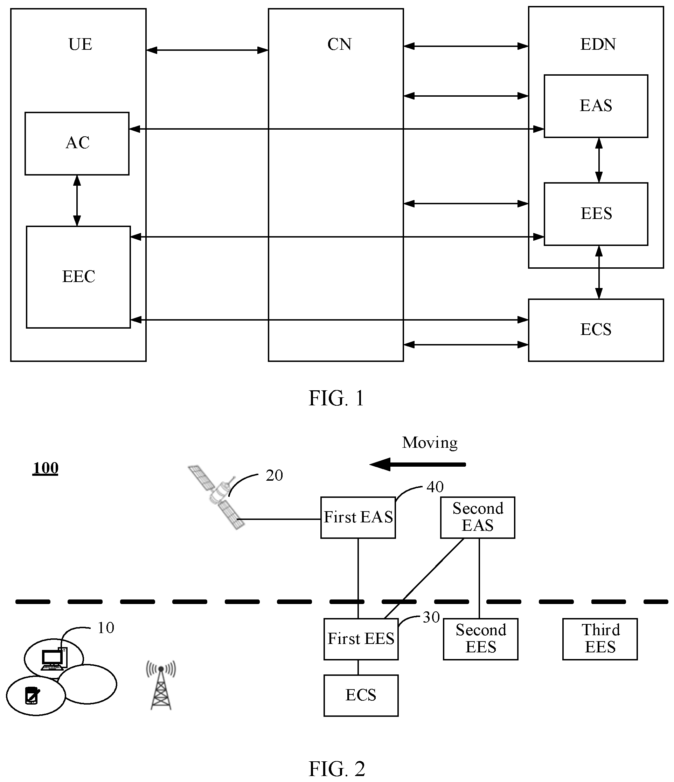

The communication method provided in embodiments of this application may be applied to different network systems, for example, a fifth generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, or the like. The method provided in embodiments of this application may be further applied to a future communication system, for example, a sixth generation mobile communication system or the like. In addition, the method provided in embodiments of this application may be further applied to device-to-device (device to device, D2D) communication, vehicle-to-everything (vehicle to everything, V2X) communication, machine-to-machine (machine to machine, M2M) communication, machine type communication (machine type communication, MTC), an internet of things (internet of things, IoT) communication system, or another communication system. The following uses an application-enabled MEC architecture designed in 3GPP SA6 as an example for description. However, this is not limited. FIG. 1 is a diagram of a network architecture according to an embodiment of this application. As shown in FIG. 1, a network includes UE, a CN, an EDN, and an ECS. A communication method may be performed by the UE or an AC or an EEC in the UE on a UE side, and may be performed by an EAS or an EES on an EDN side. Based on a scenario in which the EAS is deployed on a satellite in the SA6, an embodiment of this application further provides an example in which the EAS is deployed on an asynchronous satellite, and the EES and the ECS are deployed on the ground. Refer to FIG. 2. A system 100 in this scenario includes UE 10, a satellite 20, and some network elements. The network elements include EESs (including a first EES 30, a second EES, and a third EES) and the ECS that are deployed on the ground, and EASs (including a first EAS 40 and a second EAS) deployed on the asynchronous satellite. The UE 10 may alternatively be an access terminal, a subscriber unit, a subscriber station, a mobile station, a remote station, a remote terminal, a mobile device, a user terminal, a terminal, a wireless communication device, a user agent, a user apparatus, or the like. For example, a mobile phone (mobile phone), a tablet computer, a laptop computer, a palmtop computer, a mobile internet device (mobile internet device, MID), a wearable device, VR, AR, a wireless terminal in industrial control (industrial control), a wireless terminal in self driving (self driving), a wireless terminal in remote medical surgery (remote medical surgery), a wireless terminal in a smart grid (smart grid), a wireless terminal in transportation security (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device or another processing device connected to a wireless modem, a wearable device, or the like.

Refer to FIG. 1 and FIG. 2. The following provides several examples to describe the communication method in embodiments of this application. In the following examples, UE may be any component of the UE, for example, the EEC. Various message names, EAS names, EES names, satellite names, and the like provided in the procedures and descriptions of the following embodiments are all possible implementations, and are not limited.

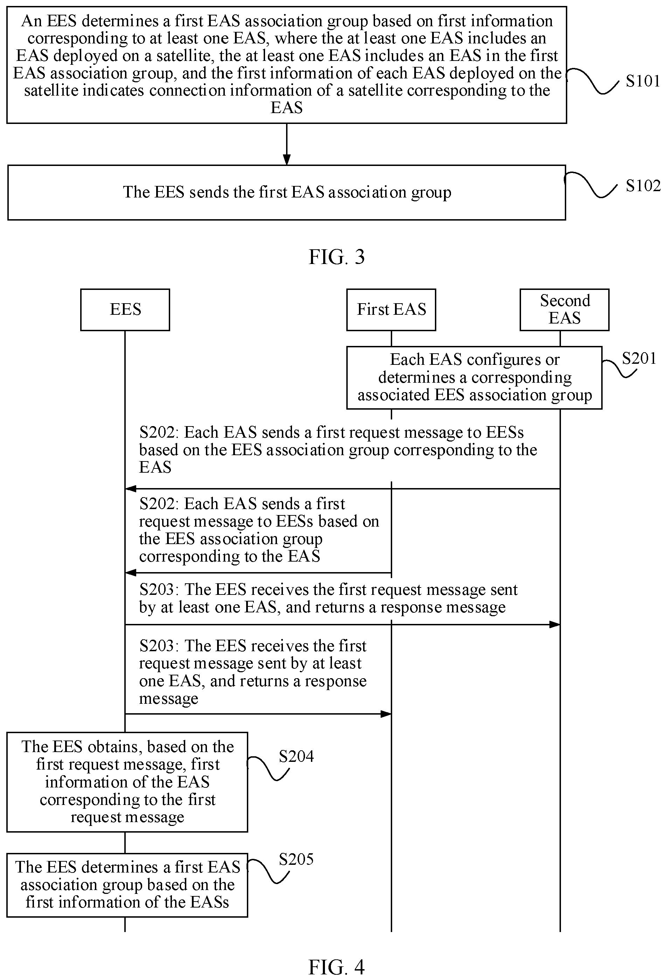

FIG. 3 is a schematic flowchart of a communication method according to an embodiment of this application. As shown in FIG. 3, the method is performed by an EES, and the method includes S101 and S102.

S101: The EES determines a first EAS association group based on first information corresponding to at least one EAS, where the at least one EAS includes an EAS deployed on a satellite, the at least one EAS includes an EAS in the first EAS association group, and the first information of each EAS deployed on the satellite indicates connection information of the satellite corresponding to the EAS.

For example, refer to FIG. 2. The first EAS and the second EAS are EASs deployed on the satellite. The EES may determine the first EAS association group based on the first information corresponding to the at least one EAS obtained by the EES. In this embodiment of this application, an EAS deployed on a specific satellite is referred to as the EAS corresponding to the satellite. If a first EES determines, based on connection information of a satellite corresponding to the first EAS, that the satellite is to connect to the first EES, it may be determined that the first EAS belongs to the first EAS association group of the first EES. In this case, if the first EES is to connect to the satellite on which the first EAS is deployed at a specific time and location, it is equivalent to that the first EAS belongs to the first EAS association group of the first EES. Similarly, if the first EES determines, based on connection information of a satellite corresponding to the second EAS, that the satellite is to connect to the first EES, it may be determined that the second EAS belongs to the first EAS association group of the first EES. In this case, EASs associated with the first EES include the first EAS and the second EAS, and the first EAS association group of the first EES may include related information of the first EAS and the second EAS, for example, an EAS identity document (identity document, ID), an EAS endpoint (EAS endpoint), EAS performance information, or ephemeris information corresponding to the EAS (the ephemeris information is a connection status of a satellite at a moment (or a time period) or a location. For example, ephemeris information of a first satellite may be that the first satellite may connect to a specific EES or specific UE at a specific moment or a specific time period. Alternatively, the ephemeris information of the first satellite may be that the first satellite may connect to a specific EES or specific UE within a specific area. Alternatively, the ephemeris information of the first satellite may be that the first satellite may connect to a specific EES or specific UE within a specific area at a specific moment or a specific time period). If the first EES determines, based on the connection information of the satellite corresponding to the second EAS, that the satellite is not to be connected to the first EES, it may be determined that the second EAS does not belong to the first EAS association group of the first EES. In this case, an EAS associated with the first EES includes the first EAS, that is, the first EAS association group of the first EES includes related information of the first EAS.

For example, the first information indicates the connection information of the satellite corresponding to the EAS. If the EAS is deployed on the satellite, the first information may include related information of the satellite on which the corresponding EAS is deployed. For example, if the first EAS is deployed on the first satellite, the first information of the first EAS may include a satellite identifier of the first satellite, to determine connection information of the first satellite on which the first EAS is deployed.

When there are a plurality of satellites and a plurality of EASs in a system, each EAS deployed on a satellite provides an edge computing service for UE at a corresponding location at a time and a location when the corresponding satellite is connected to the EES. In this case, each EES may determine the first EAS association group based on connection information between each EAS and the EES. The connection information is connectivity information of the satellite on which the EAS is deployed, and includes connectivity information of the satellite in terms of time, or connectivity information of the satellite EAS in terms of space, or connectivity information of the satellite in terms of time and space. The connectivity information in terms of space may be connectivity information of a location to which the satellite is mapped on a ground, for example, connectivity information of the satellite in a specific country, a specific province or city area, or a specific street, or alternatively, connectivity information of the satellite in a specific operator network or the like. For example, the first EAS association group obtained based on the first information corresponding to the EAS may include related information of each EAS. The related information of the EAS includes an EAS ID, EAS address information (EAS endpoint (endpoint), including address information such as a uniform resource locator (uniform resource locator, URI) and an internet protocol (internet protocol, IP) address), EAS performance information, and connection information of each EAS.

It should be noted that, the EES may obtain the first information of the EAS in several manners. One manner is that the EAS sends a registration request message to the EES, where the registration request message may carry the first information. Another manner is that the EES may obtain the first information of the EAS by using a system.

S102: The EES sends the first EAS association group.

Optionally, the EES may send the first EAS association group to the UE, so that the UE connected to the EES obtains related information of the EAS based on the first EAS association group, and then connects, based on the first EAS association group, at a corresponding time, at a corresponding location, or at a corresponding time and location, to an EAS to be accessed.

According to the communication method provided in this embodiment of this application, the first EAS association group may be obtained by using the EES, and the first EAS association group is provided to the UE, so that the UE can connect to a plurality of EASs based on the first EAS association group, without a need to repeatedly perform an EAS discovery procedure after disconnecting from each EAS before connecting to a new EAS. With reference to the example in FIG. 2, it is assumed that the UE is currently connected to the first EAS, but as a satellite in which the first EAS is located moves, the first EAS cannot provide a service to the UE after a time period. If the UE does not obtain the first EAS association group provided by the EES, after being disconnected from the first EAS, the UE needs to discover again, through the EAS discovery procedure, an EAS that can provide a service. However, after the EES determines, based on the first information of the EAS, that the first EAS moves away, the satellite on which the second EAS is deployed accesses the EES, so that the first EAS association group including the first EAS and the second EAS is obtained. After the EES sends the first EAS association group to the UE, if the second EAS can also provide a required service for the UE, the UE may access the second EAS based on the first EAS association group after disconnecting from the first EAS. This effectively reduces a quantity of times that the UE performs the EAS discovery procedure, and reduces a possibility of service interruption caused by the EAS discovery procedure performed by the UE.

In addition, the EES may further send the ephemeris information of each EAS in the first EAS association group to the UE. In this case, the UE may connect, based on the first EAS association group and the ephemeris information, to the EAS to be accessed at a corresponding time, a corresponding location, or a corresponding time and location.

A method for the EES to obtain the first information corresponding to the at least one EAS includes obtaining by using the EAS, obtaining by using the satellite on which the EAS is deployed, or the like. In this embodiment of this application, the method for the EES to obtain the first information corresponding to the EAS is described by using the following examples.

A method in which an EES obtains first information corresponding to an EAS based on a message sent by the EAS is described below. FIG. 4 is a schematic flowchart of another communication method according to an embodiment of this application. The method may be performed by the EAS and the EES. In the example of the method, the EAS may be any EAS. For example, the EAS may include a first EAS or a second EAS. As shown in FIG. 4, the method includes S201 to S205.

S201: Each EAS configures or determines a corresponding associated EES association group.

In this embodiment of this application, EASs that provide a same edge computing service for UE are represented by a same EAS ID or application identifier, so that during description, it is learned that these EASs are a same application, for example, a shopping application or a chat application. In an actual use scenario, EAS identifiers of a same application deployed on different satellites or on a ground and a satellite may be different. This is not limited to the examples provided in embodiments of this application.

For example, it is assumed that the at least one EAS includes the first EAS deployed on a first satellite, a third EAS deployed on the first satellite, and a second EAS and a fourth EAS deployed on a second satellite. The first EAS may be configured with an EES association group associated with the first EAS, for example, the configured EES association group is obtained through operation, administration, and management (Operation Administration and Maintenance, OAM) in an order in which the first EAS connects to EESs. For example, the first EAS (deployed on the first satellite) is connected to a first EES from 9:00 to 10:00, connected to a fifth EES from 10:00 to 11:00, ..., connected to a third EES from 17:00 to 18:00, and connected to the first EES from 18:00 to 19:00. The EES association group associated with the first EAS includes: the first EES, the fifth EES, ..., the third EES, and the first EES. Further, the EES association group may further include information such as an EES identity (identity, ID) or an EES endpoint (endpoint) corresponding to each EES. With reference to the first EAS, the second EAS, the third EAS, and the fourth EAS are respectively configured with their associated EESs based on the order in which the EASs connect to the EESs. For example, an EES association group of the second EAS configured for the second EAS deployed on a first base station includes: the first EES, the second EES, ..., the first EES, and the third EES, and an EES association group of the second EAS deployed on the second satellite includes: the first EES, the fourth EES, ..., the fifth EES, the third EES, and the like.

S202: Each EAS sends the first request message to the EESs based on the EES association group corresponding to the EAS.

With reference to the example in S201, the EES association group of the first EAS includes the first EES, the fifth EES, ..., the third EES, and the first EES, and the first EAS may separately send the first request message to the first EES, the fifth EES, ..., and the third EES. For example, the first request message may be a registration request message (or referred to as an EAS registration request message), and the first EAS separately sends the registration request message to the first EES, the fifth EES, ..., and the third EES. The registration request message carries first information of the first EAS. The first information of the first EAS may include connection information of the first EAS, that is, ephemeris information of the first satellite corresponding to the first EAS. The connection information indicates connectivity information of the satellite in terms of time; or the connection information indicates connectivity information of the satellite in terms of space; or the connection information indicates connectivity information of the satellite in terms of time and space. With reference to the example in S201, the first EAS is deployed on the first satellite, and the ephemeris information of the first satellite includes that the first satellite is available at a specific moment within a specific area. Correspondingly, the first EAS is connectable to the EES at that moment and within that area to provide an edge computing service.

For example, the first satellite may connect to the UE or the EES from 9:00 to 10:00; or the first satellite may connect to the UE or the EES within a first area; or the first satellite may connect to the UE or the EES from 9:00 to 10:00 within the first area; or the first satellite may connect to the UE or the EES within the first area from 9:00 to 10:00.

In an example, the ephemeris information of the first satellite may indicate to connect to the first EES within the first area from 9:00 to 10:00, to connect to the second EES within a second area from 10:00 to 11:00, to connect to the third EES within a sixth area from 17:00 to 18:00, and to connect to the first EES within the first area from 18:00 to 19:00. Ephemeris information of the second satellite may indicate to connect to the first EES within the second area from 9:00 to 10:00, to connect to the fourth EES within an eighth area from 10:00 to 11:00, to connect to the fifth EES within the first area from 17:00 to 18:00, to connect to the third EES within the sixth area from 18:00 to 19:00, and the like.

For example, it is assumed that an EAS ID corresponding to an application 1 is 1, an EAS ID corresponding to an application 2 is 2, an EAS ID corresponding to an application 3 is 3, an EAS ID of the first EAS is EAS ID 1, an EAS ID of the second EAS is EAS ID 2, an EAS ID of the third EAS is EAS ID 2, an EAS ID of the fourth EAS is EAS ID 1, and an EAS ID of a fifth EAS is EAS ID 3. Corresponding to the application 1, a group of EASs associated with the EES includes the first EAS and the fourth EAS; and corresponding to the application 2, a group of EASs associated with the EES includes the second EAS, the third EAS, and the like.

Optionally, in addition to the ephemeris information of the first satellite, the first information of the first EAS may further include related information of the EAS, for example, the EAS ID 1. In addition to the ephemeris information of the second satellite, first information of the second EAS may further include related information of the EAS, for example, the EAS ID 2. Similarly, if the third EAS is also deployed on the first satellite, first information sent by the third EAS may include the ephemeris information of the first satellite and the related information of the EAS, for example, the EAS ID 2. If the fourth EAS is also deployed on the second satellite, first information sent by the fourth EAS may include the ephemeris information of the second satellite and the related information of the EAS, for example, the EAS ID 1. The same logic applies to other EASs.

S203: The EES receives the first request message sent by the at least one EAS, and returns a response message.

For example, it is assumed that the first EES receives registration request messages sent by EASs such as the first EAS deployed on the first satellite and the second EAS deployed on the second satellite, and the first EES returns the response message to the first EAS and the second EAS. The response message may be a registration response message including indication information indicating a registration success or failure. If registration of the second EAS fails, the first EES may send a registration response message to the second EAS to indicate the registration failure, or does not send a registration response message to the second EAS to indicate the registration failure.

The EES may receive first request messages sent by a plurality of EASs, and reception times may vary. After receiving the first request message of one EAS, the EES may obtain first information of the EAS corresponding to the first request message, while receiving the first request message of another EAS. Therefore, when S202 and S203 are performed, S204 and S205 may also be performed. An order of performing the steps is not limited in embodiments of this application.

In addition, after receiving the first request message sent by the EAS, the EES may send the corresponding response information to the EAS after the first EAS association group is determined. In other words, S204 and S205 may be performed between S202 and S203, for example, S204 and S205 may be performed before S203 returns the response message. An execution order is not limited to the examples in embodiments of this application.

S204: The EES obtains, based on the first request message, first information of the EAS corresponding to the first request message.

For example, it is assumed that the first EES receives first information sent by a plurality of EASs, and determines, based on the first information of the EASs, the following information: The first EAS is connected to the first EES within the first area from 9:00 to 10:00, and an EAS identifier of the first EAS is EAS ID 1; the second EAS is connected to the first EES within the second area from 9:00 to 10:00, and an EAS identifier of the second EAS is EAS ID 2; the third EAS is connected to the first EES within the first area from 9:00 to 10:00, and an EAS identifier of the third EAS is EAS ID 2; the fourth EAS is connected to the first EES within the second area from 9:00 to 10:00, and an EAS identifier of the fourth EAS is EAS ID 1; the fifth EAS is connected to the first EES within the sixth area from 10:00 to 11:00, and an EAS identifier of the fifth EAS is EAS ID 2; the second EAS is connected to the first EES again within the second area from 17:00 to 18:00; and the first EAS is connected to the first EES again within the first area from 18:00 to 19:00, and so on. The second EES receives the first information sent by the EASs, and determines, based on the first information of the EASs, that the second EAS is connected to the second EES within the second area from 10:00 to 11:00, and so on.

S205: The EES determines the first EAS association group based on the first information of the EASs.

For example, an example in which the first EES determines the first EAS association group with reference to the example in S204 is used. In the following example, the first EAS association group is an example of possibilities that the EES is associated with the EASs, and is not limited by a name or a form of example. For the first EAS association group, refer to Table 1, and the first EAS association group is implemented in a form of list. In Table 1, an example in which first location information includes a location and a time corresponding to the location is used for description.

**Table 1**

| EASs | EAS IDs | First location information | First location information | ... |
|---|---|---|---|---|
| First EAS | EAS ID 1 | 9:00 to 10:00, first area | 18:00 to 19:00, first area | |
| Second EAS | EAS ID 2 | 9:00 to 10:00, second area | 17:00 to 18:00, second area | |
| Third EAS | EAS ID 2 | 9:00 to 10:00, first area | | |
| Fourth EAS | EAS ID 1 | 9:00 to 10:00, second area | 10:00 to 11:00, first area | |
| Fifth EAS | EAS ID 3 | 10:00 to 11:00, sixth area | | |
| Sixth EAS | EAS ID 1 | 10:00 to 11:00, first area | | |
| ... | ... | ... | ... | |

Alternatively, for the first EAS association group, refer to Table 2 and Table 3. One first EAS association group is generated corresponding to each EAS ID. In this way, when the UE needs an application to provide a service, the EES may send, to the UE, a first EAS association group of an EAS ID corresponding to the application required by the EES. The first EAS association group may be implemented in a form of list, or may be described by using information. In this embodiment of this application, an example in which the first EAS association group generated corresponding to the EAS ID 1 is Table 2 and the first EAS association group generated corresponding to the EAS ID 2 is Table 3 is used for description, but this is not limited.

**Table 2**

| EASs | EAS IDs | First location information | First location information | ... |
|---|---|---|---|---|
| First EAS | EAS ID 1 | 9:00 to 10:00, first area | 18:00 to 19:00, first area | |
| Fourth EAS | EAS ID 1 | 9:00 to 10:00, second area | 10:00 to 11:00, first area | |
| ... | ... | ... | ... | |

**Table 3**

| EASs | EAS IDs | First location information | First location information | ... |
|---|---|---|---|---|
| Second EAS | EAS ID 2 | 9:00 to 10:00, second area | 17:00 to 18:00, second area | |
| Third EAS | EAS ID 2 | 9:00 to 10:00, first area | | |
| ... | ... | ... | ... | |

Alternatively, for the first EAS association group, refer to Table 4. One first EAS association group is generated corresponding to each area. In this way, when the UE is located in a specific area, a first EAS association group corresponding to a location of the UE may be sent to the UE. The first EAS association group may be implemented in a form of list, or may be described by using information. In this embodiment of this application, an example in which the first EAS association group generated corresponding to the first area is Table 4 is used for description, but this is not limited.

**Table 4**

| EASs | EAS IDs | First location information | First location information | ... |
|---|---|---|---|---|
| First EAS | EAS ID 1 | 9:00 to 10:00, first area | 18:00 to 19:00, first area | |
| Third EAS | EAS ID 2 | 9:00 to 10:00, first area | | |
| Fourth EAS | EAS ID 1 | 10:00 to 11:00, first area | | |
| Sixth EAS | EAS ID 1 | 10:00 to 11:00, first area | ... | |

In conclusion, the first EES determines the first EAS association group based on the first information of the EASs, that is, obtains the first EAS association group based on connection statuses between the EASs and the first EAS. The first EAS association group may include connection information of the EASs, and corresponds to the EAS IDs. Alternatively, the first EAS association group may be obtained for each EAS ID. For example, when information carried in a request message sent by the UE can correspond to one or more EAS IDs, a corresponding first EAS association group is sent to the UE. For example, when the UE requests to discover an EAS of the EAS ID 1, the first EES may send Table 2 to the UE. Alternatively, the first EAS association group may be further obtained for each area. For example, when it is determined that the UE is in or is to be in one or more areas, a corresponding first EAS association group is sent to the UE. For example, if the first EES determines that the UE is in the first area, Table 4 is sent to the UE. Alternatively, the first EAS association group may be separately obtained based on another parameter, for example, a time. In this method for obtaining the first EAS association group based on different parameter classification and sending the first EAS association group to the first EAS, information carried in a message for sending the first EAS association group can be reduced, and storage space required by the UE after reception can be correspondingly reduced.

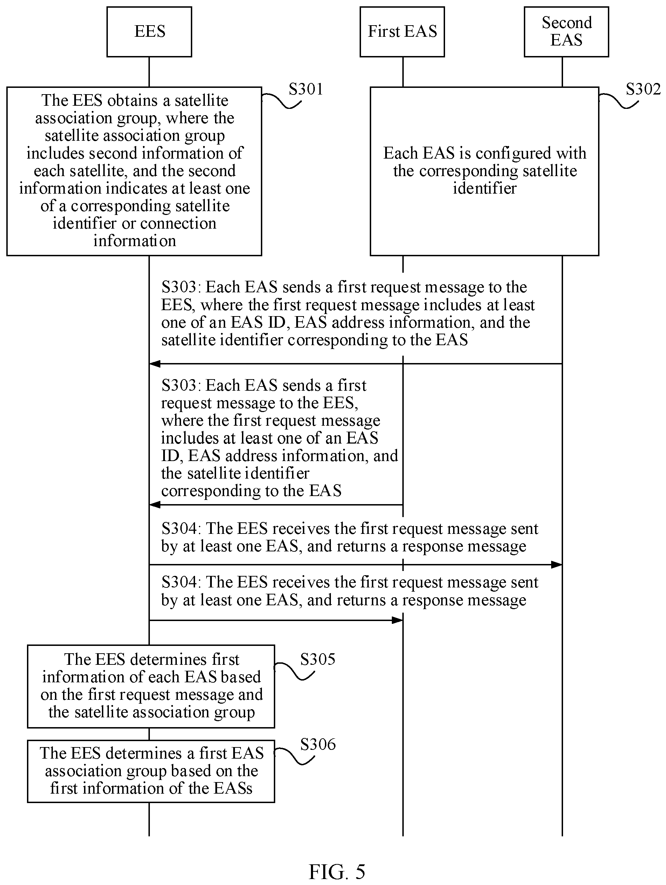

A method in which an EES obtains first information corresponding to an EAS based on a satellite on which the EAS is deployed is described below. FIG. 5 is a schematic flowchart of another communication method according to an embodiment of this application. The method may be performed by the EAS and the EES. In the example of the method, the EAS may be any EAS. For example, the EAS may include a first EAS or a second EAS. As shown in FIG. 5, the method includes S301 to S306.

S301: The EES obtains a satellite association group, where the satellite association group includes second information of each satellite, and the second information indicates at least one of a corresponding satellite identifier or connection information.

For example, the EES obtains, from an OAM system, a satellite association group associated with the EES, where the satellite association group includes at least one satellite, and each satellite included in the satellite association group may connect to the EES. This may be referred to as being associated with the EES. Optionally, specific satellites associated with the EES may be configured by the OAM based on trajectories of the satellites.

Optionally, the satellite association group may include a satellite identifier of each satellite, or connection information of each satellite, or both a satellite identifier and connection information of each satellite. The satellite identifier may be any information that can identify the satellite, for example, an SAT ID, address information, or the like of the satellite. In this embodiment of this application, an example in which the satellite identifier is the SAT ID is used for description. For example, the satellite association group includes the satellite identifier and the connection information (namely, ephemeris information of the satellite) of each satellite. An SAT ID of a first satellite is SAT ID 1, and the first satellite is connected to a first EES from 9:00 to 10:00. An SAT ID of a third satellite is SAT ID 3. An SAT ID of a ninth satellite is SAT ID 9, and the ninth satellite is connected to the first EES from 15:00 to 17:00. In this way, a satellite association group obtained by the first EES includes the first satellite with the SAT ID 1, the third satellite with the SAT ID 3, and the ninth satellite with the SAT ID 9.

Optionally, it is assumed that the OAM configures information about 10 satellites for the EES based on the trajectories of the satellites, and SAT IDs included in the satellite association group obtained by the EES are a first satellite to a tenth satellite.

S302: Each EAS is configured with the corresponding satellite identifier.

For a specific application, a plurality of EASs may be deployed on a satellite. For example, if an EAS ID 1 corresponds to one or more EASs (namely, one or more EAS servers, corresponding to different address information), application instances of the EAS ID 1 may be deployed on the first satellite, the third satellite, and the fourth satellite. In this case, an SAT ID that may be configured for the application instance (namely, EAS) corresponding to the EAS ID 1 deployed on the first satellite may be the SAT ID 1, an SAT ID that may be configured for the application instance corresponding to the EAS ID 1 deployed on the third satellite may be an SAT ID 3, and an SAT ID that may be configured for the application instance corresponding to the EAS ID 1 deployed on the fourth satellite may be an SAT ID 4 or the like.

There is no sequence relationship between S301 and S302, and S303 is performed after S301 and S302.

S303: Each EAS sends a first request message to the EES, where the first request message includes at least one of an EAS ID, EAS address information, or the satellite identifier corresponding to the EAS.

For example, the first request message may be a registration request message (or referred to as an EAS registration request message).

In a possible implementation, the first EAS is deployed on the first satellite. In this case, a satellite identifier that may be configured for the first EAS deployed on the first satellite, for example, an identity of the satellite (satellite identity, SAT ID), may be the satellite identifier of the first satellite, for example, the SAT ID 1. The registration request message sent by the first EAS to the EES carries the second information, and the second information includes the SAT ID 1.

In a possible implementation, each satellite corresponds to one piece of ephemeris information. If the first EAS is deployed on the first satellite with the satellite identifier of SAT ID 1, the registration request message sent by the first EAS to the EES carries the second information, and the second information includes ephemeris information of the first satellite.

In a possible implementation, the second information includes the SAT ID 1 and the ephemeris information of the first satellite corresponding to the SAT ID 1.

S304: The EES receives the first request message sent by at least one EAS, and returns a response message.

For returning the response message, refer to the example in S203. Details are not described again.

S305: The EES determines first information of each EAS based on the first request message and the satellite association group.

In a possible implementation, the EES obtains the satellite identifier, for example, the SAT ID 1, from the second information in the first request message, and the EES determines the first information of the first EAS based on the SAT ID 1 and the ephemeris information that is of the first satellite in the satellite association group and that is obtained in S301. For first information of another EAS, refer to the method of the first EAS. Details are not described again.

For example, it is assumed that a satellite association group determined by one EES, for example, the first EES, includes the first satellite with the SAT ID 1, the third satellite with the SAT ID 3, and the ninth satellite with the SAT ID 9. The first EAS deployed on the first satellite sends the first request message to the first EES, where the second information includes that an EAS ID of the first EAS is the EAS ID 1, or the second information includes that the satellite identifier corresponding to the first EAS is the SAT ID 1. The first EES may determine, based on the second information and the obtained satellite association group, that the first EAS with the EAS ID 1 is associated with the first satellite with the SAT ID 1, that is, the first information of the EAS ID 1 may be determined based on the ephemeris information of the first satellite. If the ephemeris information of the first satellite indicates to connect to the first EES from 9:00 to 10:00, the first information of the first EAS may include: The first EAS may connect to the first EES from 9:00 to 10:00, to provide an application service corresponding to the EAS ID 1 for UE. It is assumed that the fifth EAS deployed on the third satellite also sends the first request message to the first EES, where the second information includes that an EAS ID of the fifth EAS is the EAS ID 3, or includes that the satellite identifier corresponding to the first EAS is the SAT ID 3. The first EES may determine, based on the first request message and the obtained satellite association group, that the fifth EAS with the EAS ID 3 is associated with the third satellite with the SAT ID 3, that is, the first information of the EAS ID 3 may be determined based on ephemeris information of the third satellite. If the ephemeris information of the third satellite indicates to connect to the first EES from 12:00 to 13:00, first information of the fifth EAS may include: The fifth EAS may connect to the first EES from 12:00 to 13:00, to provide an application service corresponding to the EAS ID 3 for the UE.

In a possible implementation, the first request message of each EAS carries both the satellite identifier and the connection information of the satellite. In this case, the EES may not perform S301. When performing S305, the EES correspondingly obtains, based on the satellite identifier and the connection information of the satellite that are carried in the first request message, the first information of the EAS deployed on the satellite. For example, the first request message sent by the first EAS deployed on the first satellite to the first EES includes that the SAT ID 1 may connect to the first EES from 9:00 to 10:00. Therefore, the first information that may be determined by the first EES for the first EAS includes that the first EES may be connected from S9:00 to 10:00, to provide an application service for the UE. The EAS ID corresponding to the first EAS may be carried in the second information, or may be determined by the EES by using another method. This is not limited.

S306: The EES determines the first EAS association group based on the first information of the EASs.

For details, refer to the example in S205. Details are not described herein again.

According to the method provided in FIG. 4 or FIG. 5 in embodiments of this application, after obtaining the first EAS association group, the EES may send the first EAS association group to the UE, for example, send the first EAS association group to the UE by including the first EAS association group in the response message; or may further obtain a second EAS association group based on a request message of the UE, and send the second EAS association group to the UE; or may determine all EASs that can connect to the EES as an association group, and send the association group to the UE.

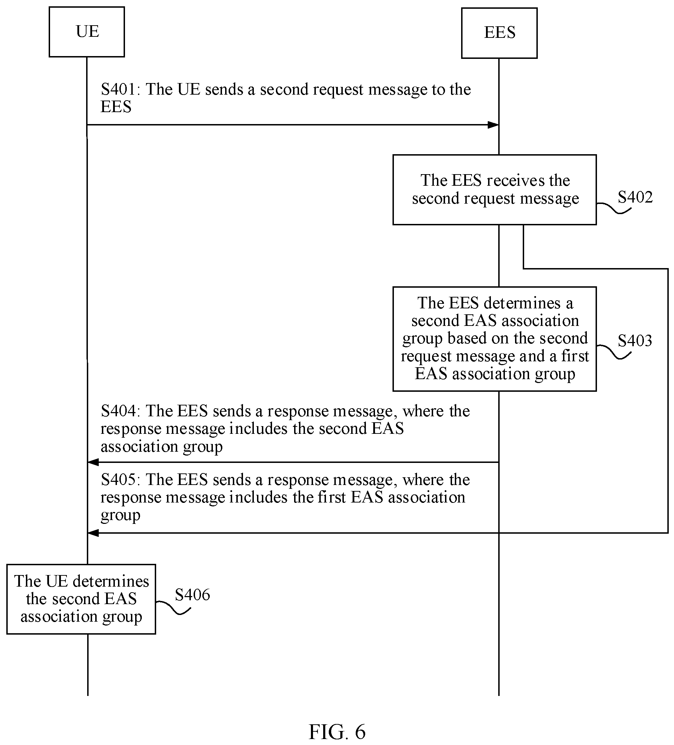

FIG. 6 is a schematic flowchart of another communication method according to an embodiment of this application. An example in which an EES further obtains a second EAS association group based on a request message of UE and sends the second EAS association group to the UE is used for description. As shown in FIG. 6, the method includes S401 to S404, or S401, S402, S405, and S406. S401 to S403 may be performed after S201 to S205 provided in FIG. 4, or may be performed after S301 to S306 provided in FIG. 5.

S401: The UE sends a second request message to the EES.

The UE may send a second request message to the EES. After receiving the second request message, the EES provides an EAS association group to the UE based on the second request message. That the UE sends the second request message to a first EES is used as an example.

In an example, if the first EES receives the second request message sent by the UE, the first EES may provide, to the UE based on the second request message, the EAS association group including all EASs capable of accessing the first EES.

In an example, to make EASs in a first EAS association group provided to the UE better meet requirements of the UE, the second request message sent by the UE to the first EES carries application information. The application information corresponds to an EAS. In other words, the EAS may be determined based on the application information. The application information may be at least one of information such as an EAS ID, an application identifier (application ID), or an ACID. For example, the application information may be the EAS ID. If the UE needs a service of an EAS ID 1, the second request message carries the EAS ID 1.

In an example, the second request message may further carry first location information, and the first location information includes at least one piece of location information of the UE. For example, the first location information may include at least one piece of location information of the UE, for example, current location information of the UE, or at least one piece of predicted location information of the UE. The current location information includes at least one of a current location or a current time of the UE. The predicted location information includes at least one of a predicted time or a predicted location corresponding to the predicted time. For example, the first location information includes the current location of the UE; or the first location information includes the predicted location of the UE; or the first location information includes a predicted location corresponding to at least one predicted time of the UE; or the first location information includes the current location of the UE and the predicted location corresponding to the at least one predicted time; or the first location information includes the at least one predicted time of the UE and a predicted location corresponding to each predicted time; or the first location information includes the at least one predicted time of the UE. In this way, the first EES determines the EAS association group for the UE based on the first location information, for example, the EAS association group shown in Table 4, or indicates an EAS to be accessed or the like for the UE based on the first location information. S402: The EES receives the second request message. In an example, if the second request message carries the application information and the first location information, S403 and S404 are performed.

In an example, if the second request message carries the application information, S405 and S406 are performed.

S403: The EES determines the second EAS association group based on the second request message and the first EAS association group.

For example, if the second request message includes the application information, the EES determines the second EAS association group from the first EAS association group based on an EAS corresponding to the application information. For example, it is assumed that after the first EES receives the second request message of the UE, the application message carried in the second request message is that an EAS ID of the EAS requested by the UE is an EAS ID 2. With reference to the example in S205, if the first EES obtains the first EAS association group in Table 1, an EAS corresponding to the EAS ID 2 and related information of the EAS may be determined from Table 1 based on the EAS ID 2, to obtain the second EAS association group. The second EAS association group may be a table shown in Table 3, or may be information formed by the second EAS, the third EAS, and related information corresponding to the second EAS and the third EAS. If the first EAS association group obtained by the first EES is a plurality of EAS association groups distinguished based on the EAS ID, Table 3 is selected as the second EAS association group from the plurality of EAS association groups based on the EAS ID 2.

The second request message further includes the first location information. For example, the second request message may further carry the at least one piece of location information of the UE. In this case, each piece of location information should be further considered when the second EAS association group is determined from the first EAS association group. For example, the first EAS association group obtained by the first EES is Table 1. If the first location information in the second request message includes that the location information of the UE is a first area, and the EAS corresponding to the application information is an EAS ID 1, the first EES may determine that the second EAS association group includes: a first EAS (with a connection time to the first EES being from 9:00 to 10:00 and from 18:00 to 19:00), a fourth EAS (with a connection time to the first EES being from 10:00 to 11:00), and a sixth EAS (with a connection time to the first EES being from 10:00 to 11:00). The fourth EAS and the sixth EAS are in a same time period and can provide an edge computing service of the EAS ID 1 within a same area, the second EAS association group may include the first EAS, and either the fourth EAS or the sixth EAS. If the first location information in the second request message includes that the UE is in the first area from 10:00 to 11:00, and the EAS corresponding to the application information is the EAS ID 1, the first EES determines that the second EAS association group includes at least one of the fourth EAS or the sixth EAS.

S404: The EES sends a response message, where the response message includes the second EAS association group.

For example, the first EES sends the response message to the UE, where the response message carries the second EAS association group, or the response message carries the second EAS association group and indicates an EAS to be accessed.

For example, that the response message indicates the EAS to be accessed may include: If the first location information includes an initial location predicted by the UE and a time corresponding to the initial location, the EES may determine, in the first EAS association group, one EAS to be accessed based on the initial location and the time corresponding to the initial location; or if the first location information includes the current location of the UE, the EES may determine, in the first EAS association group, one EAS to be accessed based on the current location and the current time. If the first location information includes a plurality of pieces of predicted location information, or includes the current location and the at least one piece of predicted location information, a corresponding EAS to be accessed may be obtained in the manner in this example. Correspondingly, the response message may indicate an EAS to be accessed by the UE at the current location; or the response message may further indicate an EAS to be accessed by the UE at a predicted location corresponding to one or more predicted times, and the like. The predicted time includes an initial access time of the UE, and the corresponding predicted location is an initial access location of the UE.

With reference to the example in S403, if the first EES determines, based on the first location information, that the current location of the UE is the first area, and the current time is 10:30, the first EES may indicate the UE to correspondingly access the fourth EAS or the sixth EAS.

S405: The EES sends a response message, where the response message includes the first EAS association group.

In an example, if the first EES receives the second request message sent by the UE, the first EES may provide, to the UE based on the second request message, the EAS association group including all EASs capable of accessing the first EES.

In an example, the second request message carries application information. For example, the application information may be the EAS ID. If the UE needs edge computing services of an EAS ID 1 and an EAS ID 2, the first EES may include, in the response message, the first EAS association group corresponding to the EAS ID 1 and the EAS ID 2, that is, Table 2 and Table 3. Alternatively, when the request message does not carry the EAS ID or does not carry the first location information of the UE, step S403 is not performed. In this case, the first EES may include, in the response message, Table 1 including related information of the EAS ID 1 and the EAS ID 2.

S406: The UE determines the second EAS association group.

The UE determines the second EAS association group based on information about the first EAS association group and at least one of the application information of the UE or the first location information of the UE.

Optionally, the response message received by the UE carries the first EAS association group, and the second EAS association group may be determined based on the application information needed by the UE, or the second EAS association group may be determined based on the application information needed by the UE and the first location information.

For example, it is assumed that the needed application information is to access an EAS whose EAS ID is an EAS ID 2. The first EAS association group carried in the response message is shown in Table 1. Therefore, the EAS corresponding to the EAS ID 2 and related information of the EAS may be determined from Table 1 based on the EAS ID 2, to obtain the second EAS association group, for example, the second EAS association group similar to Table 3.

For example, if the needed application information is to access the EAS whose EAS ID is the EAS ID 2, and the first location information of the UE is that the UE is in the first area, the UE may determine, from the first EAS association group shown in Table 1, that the second EAS association group includes: a first EAS (with a connection time to the first EES being from 9:00 to 10:00 and from 18:00 to 19:00), a fourth EAS (with a connection time to the first EES being from 10:00 to 11:00), and a sixth EAS (with a connection time to the first EES being from 10:00 to 11:00). The fourth EAS and the sixth EAS are in a same time period and can provide an edge computing service of the EAS ID 1 within a same area, the UE may optionally select at least one of the fourth EAS or the sixth EAS to be included in the second EAS association group. Optionally, if the response message received by the UE carries the second EAS association group, the second EAS association group may be obtained based on the response message.

Further, after obtaining the second EAS association group, the UE may further determine, based on the first location information of the UE, an EAS to be accessed by the UE, and perform access based on the designated time and area. For example, the UE may connect, based on a current location and a current moment of the UE, to the corresponding EAS to be accessed. For example, the UE is currently in the first area, the current time is 9:00, and the UE needs to connect to an EAS with an EAS ID 1. In addition, the UE determines, based on the second EAS association group, that a first EAS deployed on a first satellite may connect to the UE within the first area from 9:00 to 10:00. Therefore, the UE may determine that the EAS to be accessed within the first area from 9:00 to 10:00 is the first EAS on the first satellite, and so on. Similarly, the UE may further correspondingly determine another EAS to be accessed based on at least one of another location or time included in the first location information. Optionally, if the response message received by the UE carries connection information of all EASs corresponding to the EES, the UE may determine the first EAS association group from the connection information of all the EASs based on an EAS ID corresponding to application information needed by the UE. In addition, the UE may further select, based on the first location information of the UE, an area or a time and an area corresponding to the first location information from the determined first EAS association group, to determine the second EAS association group. For the method, refer to the foregoing examples. Details are not described.

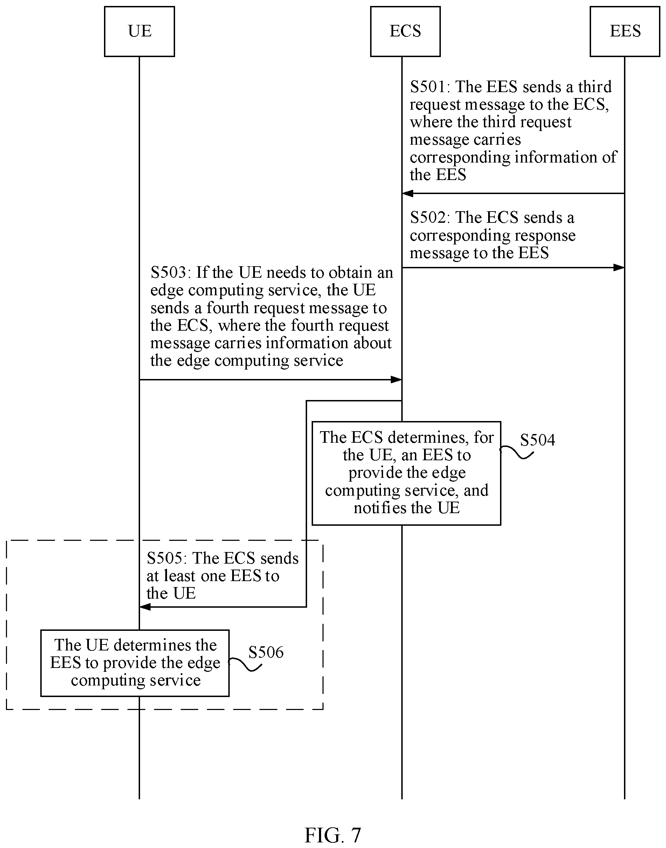

FIG. 7 is a schematic flowchart of another communication method according to an embodiment of this application. As shown in FIG. 7, the method includes S501 to S504, or S501 to S503, S505, and S506. The method provided in FIG. 7 may be performed after S201 to S205 provided in FIG. 4, or may be performed after S301 to S306 provided in FIG. 5. In a possible implementation, the method provided in FIG. 7 may be performed before S401.

Optionally, an ECS may obtain corresponding information of an EES in a preconfiguration manner or from an OAM system. In this case, the steps included in the communication method provided in this embodiment of this application may include S503 and S504, or S503, S505, and S506.

S501: The EES sends a third request message to the ECS, where the third request message carries corresponding information of the EES.

For example, the third request message may be a registration request message, and the corresponding information of the EES includes information such as an EES ID and an EES endpoint (EES endpoint) of the EES. For example, a registration request message sent by a first EES to the ECS may carry at least one of the EES ID or a first EES endpoint (endpoint).

S502: The ECS sends a corresponding response message to the EES.

For example, the ECS receives the registration request message sent by the first EES, and sends, to the first EES based on the registration request message, a response message indicating a registration success or failure. For a method in which the response message indicates the registration success or failure, refer to S203. Details are not described again.

S503: If UE needs to obtain an edge computing service, the UE sends a fourth request message to the ECS, where the fourth request message carries information about the edge computing service.

For example, the information about the edge computing service may be at least one of application information or an application client profile (application client profile). Information included in the application client profile (application client profile) includes one or more of the following information centers: an AC ID, an application ID, an expected service area (geographical area or topology area), an EAS ID, an expected AC service key performance indicator (key performance indicator, KPI), and a minimum required application client service key performance indicator (AC service KPI).

For example, the fourth request message may be an EES discovery request message or a service provisioning request message (service provisioning request message). The information about the edge computing service may include the application client profile (application client profile) and the like. If the information about the edge computing service that needs to be obtained by the UE includes an expected service area 1, the fourth request message may include the expected service area 1.

S504: The ECS determines, for the UE, an EES to provide the edge computing service, and notifies the UE.

For example, the ECS selects, for the UE based on first location information of the UE and the service area of the EES, one or more EESs to provide the edge computing service. If the fourth request message carries the first location information of the UE, the ECS may determine the first location information of the UE by using the fourth request message, and the ECS selects, for the UE based on the first location information of the UE and the service area of the EES, the one or more EESs to provide the edge computing service. If the fourth request message does not carry the first location information of the UE, the ECS may obtain a current location of the UE based on a location at which the UE sends the fourth request message. Alternatively, the ECS may obtain the current location of the UE from a 5G core network (5G core, 5GC) based on a UE ID, and then the ECS selects, for the UE based on a local policy (local policy), the one or more EESs to provide the edge computing service.

Optionally, the ECS may send the determined related information of the EES to the UE, including information such as the EES ID and the EES endpoint (EES endpoint). For example, the UE needs to obtain an edge computing service in the expected service area 1. It is assumed that the ECS determines, based on the expected service area 1 in the received fourth request message, that an EAS with an EAS ID 1 may provide the edge computing service. With reference to the foregoing example, the EAS corresponding to the EAS ID 1 includes the first EAS and the fourth EAS, so that the UE can determine that an EES that can connect to the first EAS and the fourth EAS is the EES that can provide the edge computing service to the UE.

S505: The ECS sends at least one EES to the UE.

Alternatively, the ECS may send related information of at least one EES to the UE when an EES that provides the edge computing service to the UE is not determined, and the UE may determine, based on the received related information of the EESs, one EES to provide the edge computing service.

S506: The UE determines the EES to provide the edge computing service.

For a method for determining the EES by the UE, refer to the method for determining the EES by the ECS in S504. For example, the UE determines related information of each EES based on the received at least one EES, including the EES ID, the EES endpoint (EES endpoint), and the like. If the UE needs to obtain the edge computing service in the expected service area 1, that is, the EAS corresponding to the EAS ID 1 provides the edge computing service, the UE determines at least one EES that can connect to the first EAS and the fourth EAS, to provide the edge computing service.

With reference to the method provided in FIG. 6, the ECS may determine, for the UE, a plurality of EESs to provide the edge computing service, or the UE may determine by itself a plurality of EESs to provide the edge computing service. Therefore, the UE sends the second request message to each determined EES. For example, the ECS may determine a first EES and a second EES for the UE, and the UE (for example, the EEC in the UE) may separately send the second request message to the first EES and the second EES. Alternatively, the UE determines one EES from the plurality of EESs based on the first location information, for example, the current location of the UE, and sends the second request message to the EES.

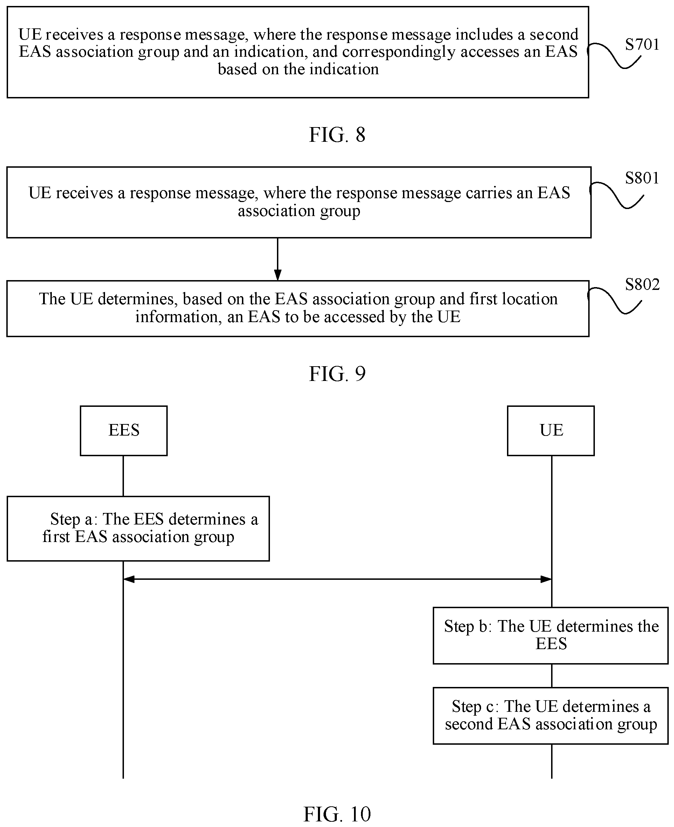

FIG. 8 is a schematic flowchart of another communication method according to an embodiment of this application. The method is performed by UE. For example, the method may be performed by an EEC in the UE. The method includes S701. S701 may be performed in S404 when the response message carries the second EAS association group and indicates the EAS to be accessed.

S701: The UE receives a response message, where the response message includes a second EAS association group and an indication, and correspondingly accesses an EAS based on the indication.

Optionally, the UE accesses a corresponding EAS to be accessed at a corresponding location and time based on the indication of the response message.

Corresponding to the example in S404, if the response message carries the second EAS association group, the first EES may determine that the second EAS association group includes: a first EAS (with a connection time to the first EES being from 9:00 to 10:00 and from 18:00 to 19:00), a fourth EAS (with a connection time to the first EES being from 10:00 to 11:00), and a sixth EAS (with a connection time to the first EES being from 10:00 to 11:00), and indicates that the EAS to be accessed by the UE from 10:00 to 11:00 is the fourth EAS. The UE may access the fourth EAS based on the indication. After connection to the fourth EAS expires at an end of this time period, the UE may determine a next EAS to be accessed based on the second EAS association group.

According to the communication method provided in this embodiment of this application, in a scenario in which at least one EAS is deployed on a satellite, an EAS association group can be provided to UE, so that the UE can connect to an EAS based on connection requirements corresponding to different first location information and EAS IDs. When the EAS is deployed on the satellite, movement of the satellite allows each EAS deployed on the satellite to provide a service to the UE for a period of time. When the satellite moves to a location at which the UE cannot be connected, the UE needs to re-discover a new EAS. This requires repeatedly performing an EAS discovery procedure, leading to service interruption. According to the communication method provided in this embodiment of this application, a quantity of times that the UE repeatedly discovers EASs is effectively reduced, and the EAS discovery procedure is optimized. Therefore, a quantity of times of repeatedly performing the EAS discovery procedure can be reduced, and service interruption caused by performing the EAS discovery procedure can be reduced, thereby improving communication efficiency.

According to the method provided in FIG. 4 or FIG. 5 in embodiments of this application, after obtaining the first EAS association group, the EES may send the first EAS association group to the UE, for example, send the first EAS association group to the UE by including the first EAS association group in the response message; or may further obtain a second EAS association group with reference to the method provided in FIG. 6, and send the second EAS association group to the UE; or may determine all EASs that can connect to the EES as an association group, and send the association group to the UE.

FIG. 9 is a schematic flowchart of another communication method according to an embodiment of this application. The method is performed by UE. For example, the method may be performed by an EEC in the UE. The method includes S801 and S802. S801 and S802 may be performed when a response message does not include an indication, for example, in S404, when the response message carries the second EAS association group.

S801: The UE receives a response message, where the response message carries an EAS association group.

The EAS association group includes at least one of a first EAS association group, a second EAS association group, or all EASs that can connect to the EES.

S802: The UE determines, based on the EAS association group and first location information, an EAS to be accessed by the UE.

In a possible implementation, if the response message received by the UE carries the first EAS association group, the UE may alternatively directly determine the EAS to be accessed from the first EAS association group. For example, the UE may query Table 1 based on a fact that a current time is 9:00 and the UE needs to connect to an EAS with an EAS ID 1, to determine that the EAS to be accessed is a first EAS or the like. Alternatively, if connection information of all the EASs corresponding to the EES is carried, the UE may also directly determine the EAS to be accessed from the connection information of all the EASs corresponding to the EES. In a possible implementation, if the EAS association group received by the UE does not include related information of EASs after 12:00, the UE may send an EAS discovery request message to the EES again when the UE is about to be unable to connect to a current satellite, for example, before 12:00, and start an EAS discovery procedure again with reference to S201 to S205 and S301 to S306. Alternatively, with reference to the method in S406, the second EAS association group is determined from the first EAS association group, and then the EAS to be accessed is determined from the second EAS association group.

In a possible implementation, if the response message received by the UE carries the second EAS association group, the UE may alternatively determine the EAS to be accessed from the second EAS association group. For a method, refer to S406.

In a possible implementation, if the response message received by the UE carries at least one of all the EASs that can connect to the EES, the UE may alternatively determine the EAS to be accessed with reference to the method for determining the EAS to be accessed from the first EAS association group.

In some actual application scenarios, an embodiment of this application may provide an EAS discovery method. FIG. 10 is a schematic flowchart of an EAS discovery method according to an embodiment of this application. The method includes step a, step b, and step c.

Step a: An EES determines a first EAS association group.

For example, for step a, refer to S201 to S205. Alternatively, for step a, refer to S301 to S306. There are a plurality of methods for the EES to obtain first information corresponding to each EAS. If the first information is obtained by using a message sent by the EAS to the EES, for step a, refer to S201 to S205. If the first information of the EAS is obtained by using information about a satellite on which the EAS is deployed, for step a, refer to S301 to S306.

Step b: UE determines the EES.

For example, when an ECS obtains corresponding information of the EES in a preconfiguration manner or from an OAM system, for step b, refer to S503, S504, and S505, or for step b, refer to S503, S505, and S506.

When the EES sends a third request message to the ECS, and the ECS obtains the corresponding information of the EES based on the third request message, for step b, refer to S501 to S504, or for step b, refer to S501 to S503, S505, and S506.

Step c: The UE determines a second EAS association group.

In an example, the second request message carries application information and first location information. For step c, refer to S401 to S404. The UE may obtain the second EAS association group based on a response message sent by the EES.

In an example, the second request message carries the application information. For step c, refer to S401, S402, S405, and S406.

Further, after determining the second EAS association group, the UE may further determine an EAS to be accessed. If the response message includes an indication for the EAS to be accessed, S701 may be performed after S401 to S404. If the response message carries only the second EAS association group, S401, S402, S405, S801, S406, and S802 may be performed.

According to the communication method provided in this embodiment of this application, in a scenario in which at least one EAS is deployed on a satellite, an EAS association group can be provided to the UE, so that the UE can connect to an EAS based on connection requirements corresponding to different first location information and EAS IDs. When the EAS is deployed on the satellite, movement of the satellite allows each EAS deployed on the satellite to provide a service to the UE for a period of time. When the satellite moves to a location at which the UE cannot be connected, the UE needs to re-discover a new EAS. This requires repeatedly performing an EAS discovery procedure, leading to service interruption. According to the communication method provided in this embodiment of this application, a quantity of times that the UE repeatedly discovers EASs is effectively reduced, and the EAS discovery procedure is optimized. Therefore, a quantity of times of repeatedly performing the EAS discovery procedure can be reduced, and service interruption caused by performing the EAS discovery procedure can be reduced, thereby improving communication efficiency.

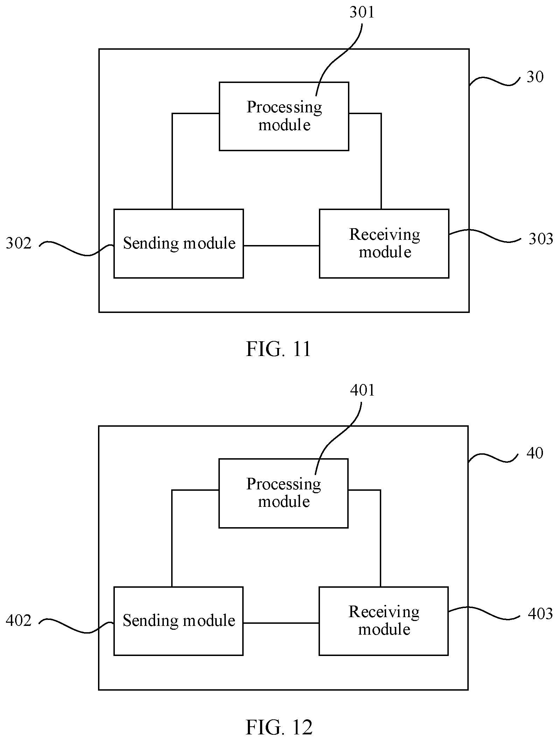

FIG. 11 is a diagram of a structure of an EES or an apparatus in the EES according to an embodiment of this application. The EES is used as an example. As shown in FIG. 11, an EES 30 includes a processing module 301, a sending module 302, and a receiving module 303.

The processing module 301 is configured to determine a first EAS association group based on first information corresponding to at least one EAS, where the at least one EAS includes an EAS deployed on a satellite, the at least one EAS includes an EAS in the first EAS association group, and the first information of each EAS deployed on the satellite indicates connection information of the satellite corresponding to the EAS.

The sending module 302 is configured to send the first EAS association group.

In a possible implementation, the connection information indicates connectivity information of the satellite in terms of time; or the connection information indicates connectivity information of the satellite in terms of space; or the connection information indicates connectivity information of the satellite in terms of time and space. The connectivity information in terms of space may be connectivity information of a location to which the satellite is mapped on a ground, for example, connectivity information of the satellite in a specific country, a specific province or city area, or a specific street, or alternatively, connectivity information of the satellite in a specific operator network or the like.

In a possible implementation, the receiving module 303 is configured to receive a first request message sent by a first EAS, where the at least one EAS includes the first EAS, and the first request message carries first information of the first EAS. The processing module 301 is specifically configured to obtain the first information of the first EAS based on the first request message.

In a possible implementation, the receiving module 303 is further configured to receive a first request message sent by a first EAS, where the first EAS is an EAS deployed on a first satellite among the at least one EAS, and the first request message carries at least one of a satellite identifier or connection information of the first satellite. The processing module 301 is further configured to determine first information of the first EAS based on the first request message of the first EAS and the second information of the first satellite.

In a possible implementation, the receiving module 303 is further configured to receive a first request message sent by a first EAS, where the first EAS is an EAS deployed on a first satellite among the at least one EAS, and the first request message carries second information of the first satellite. The processing module 301 is further configured to determine first information of the first EAS based on the second information of the first satellite.

It should be understood that the modules shown in FIG. 11 are merely examples. With reference to the method parts in embodiments of this application, the modules may perform operations of the modules, or perform variations of the operations of the modules. In the examples provided in embodiments of this application, other operations may also be performed. This is not limited to the examples in embodiments of this application.

FIG. 12 is a diagram of a structure of another EES or an apparatus in the EES according to an embodiment of this application. The EES is used as an example. As shown in FIG. 12, an EES 40 includes a processing module 401, a sending module 402, and a receiving module 403.

The processing module 401 is configured to determine a first EAS association group based on first information corresponding to at least one EAS, where the at least one EAS includes an EAS deployed on a satellite, the at least one EAS includes an EAS in the first EAS association group, and the first information of each EAS deployed on the satellite indicates connection information of the satellite corresponding to the EAS.

The receiving module 403 is configured to receive a second request message, where the second request message carries application information.

The processing module 401 is further configured to determine a second EAS association group based on the application information and the first EAS association group.

The sending module 402 is configured to send the first EAS association group.

In a possible implementation, the connection information indicates connectivity information of the satellite in terms of time; or the connection information indicates connectivity information of the satellite in terms of space; or the connection information indicates connectivity information of the satellite in terms of time and space. The connectivity information in terms of space may be connectivity information of a location to which the satellite is mapped on a ground, for example, connectivity information of the satellite in a specific country, a specific province or city area, or a specific street, or alternatively, connectivity information of the satellite in a specific operator network or the like.

In a possible implementation, the application information corresponds to an EAS; and the processing module 401 is specifically configured to determine the second EAS association group from the first EAS association group based on the EAS corresponding to the application information.

The sending module 402 is specifically configured to send a response message, where the response message includes the second EAS association group.

In a possible implementation, the receiving module 403 is configured to receive a first request message sent by a first EAS, where the at least one EAS includes the first EAS, and the first request message carries first information of the first EAS. The processing module 401 is specifically configured to obtain the first information of the first EAS based on the first request message.

In a possible implementation, the receiving module 403 is further configured to receive a first request message sent by a first EAS, where the first EAS is an EAS deployed on a first satellite among the at least one EAS, and the first request message carries at least one of a satellite identifier or connection information of the first satellite. The processing module 401 is further configured to determine first information of the first EAS based on the first request message of the first EAS and the second information of the first satellite.

In a possible implementation, the receiving module 403 is further configured to receive a first request message sent by a first EAS, where the first EAS is an EAS deployed on a first satellite among the at least one EAS, and the first request message carries second information of the first satellite. The processing module 401 is further configured to determine first information of the first EAS based on the second information of the first satellite.

In a possible implementation, the second request message further includes first location information, the first location information includes at least one piece of location information of UE, and the at least one piece of location information includes current location information of the UE or at least one piece of predicted location information of the UE, where location information includes at least one of a location or a time corresponding to the location; and the processing module 401 is specifically configured to determine the second EAS association group based on the application information, the first location information, and the first EAS association group.

In a possible implementation, if the at least one piece of location information includes a current location of the UE, the response message further indicates, in the second EAS association group, an EAS to be accessed by the UE at the current location; or if the at least one piece of location information includes the at least one piece of predicted location information of the UE, and the predicted location information includes a predicted location and a predicted time corresponding to the predicted location, the response message indicates, in the second EAS association group, an EAS to be accessed by the UE at each predicted location and at the predicted time corresponding to the predicted location.

It should be understood that the modules shown in FIG. 12 are merely examples. With reference to the method parts in embodiments of this application, the modules may perform operations of the modules, or perform variations of the operations of the modules. In the examples provided in embodiments of this application, other operations may also be performed. This is not limited to the examples in embodiments of this application.

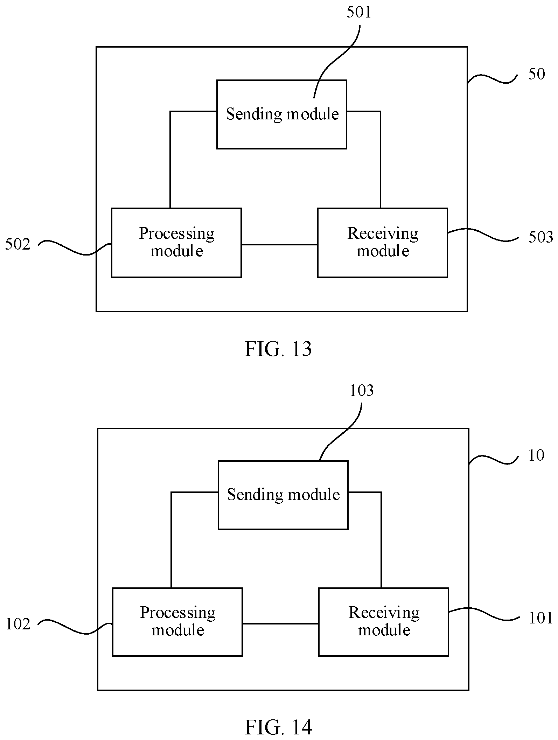

For example, an EAS is a first EAS. FIG. 13 is a diagram of a structure of a first EAS or an apparatus in the first EAS according to an embodiment of this application. For an EAS in this embodiment of this application, refer to the first EAS. As shown in FIG. 13, a first EAS 50 includes a sending module 501, a processing module 502, and a receiving module 503.

The sending module 501 is configured to send a first request message to an EES.

In a possible implementation, the first request message carries first information of the first EAS, and the first information indicates connection information of a first satellite corresponding to the first EAS.

In a possible implementation, the first request message carries at least one of a satellite identifier or connection information of a first satellite, and the first EAS is deployed on the first satellite.

In a possible implementation, the connection information indicates connectivity information of the satellite in terms of time; or the connection information indicates connectivity information of the satellite in terms of space; or the connection information indicates connectivity information of the satellite in terms of time and space.

In a possible implementation, the first EAS further includes: a processing module 502, configured to determine an EES association group associated with the first EAS; and a sending module 501, configured to send the first request message to at least one EES in the EES association group.

It should be understood that the modules shown in FIG. 13 are merely examples. With reference to the method parts in embodiments of this application, the modules may perform operations of the modules, or perform variations of the operations of the modules. In the examples provided in embodiments of this application, other operations may also be performed. This is not limited to the examples in embodiments of this application.

FIG. 14 is a diagram of a structure of UE or an apparatus in the UE according to an embodiment of this application. The UE is used as an example. As shown in FIG. 14, UE 10 includes a receiving module 101, a processing module 102, and a sending module 103.

The receiving module 101 is configured to receive an EAS association group sent by an EES, where the EAS association group includes a first EAS association group or a second EAS association group.

In a possible implementation, the sending module 103 is configured to send a second request message to the EES, where the second request message carries application information.

In a possible implementation, the sending module 103 is further configured to send a second request message to the EES, where the second request message carries application information and first location information, the first location information includes at least one piece of location information of the UE, and the at least one piece of location information includes current location information of the UE or at least one piece of predicted location information of the UE, where location information includes at least one of a location or a time corresponding to the location.

In a possible implementation, the receiving module 101 is specifically configured to receive a response message, where the response message carries the first EAS association group. The processing module 102 is specifically configured to determine, based on the first EAS association group, the application information of the UE, and the first location information of the UE, at least one EAS to be accessed.

In a possible implementation, the receiving module 101 is specifically configured to receive a response message, where the response message carries the second EAS association group. The processing module 102 is specifically configured to determine, based on the second EAS association group and the first location information of the UE, at least one EAS to be accessed.

In a possible implementation, the receiving module 101 is specifically configured to receive a response message, where the response message carries the second EAS association group, and indicates, in the second EAS association group, an EAS to be accessed by the UE at a current location.

In a possible implementation, the receiving module 101 is specifically configured to receive a response message, where the response message carries the second EAS association group, and indicates, in the second EAS association group, an EAS to be accessed by the UE at each predicted location and at a predicted time corresponding to the predicted location.

It should be understood that the modules shown in FIG. 14 are merely examples. With reference to the method parts in embodiments of this application, the modules may perform operations of the modules, or perform variations of the operations of the modules. In the examples provided in embodiments of this application, other operations may also be performed. This is not limited to the examples in embodiments of this application.

In embodiments of this application, the apparatuses provided in FIG. 11 to FIG. 14 may be applied to the scenarios provided in FIG. 1 and FIG. 2, and are respectively used as the UE 10 or a component (for example, the EEC) of the UE, the EES 30 or a component of the EES, and the EAS 40 or a component of the EAS, to implement the communication method provided in embodiments of this application. In addition, the UE 10 or the component of the UE 10, the EES 30 or the component of the EES, and the EAS 40 or the component of the EAS that are provided in embodiments of this application may be applied in combination to the communication method provided in FIG. 3 to FIG. 9, to discover the EAS.

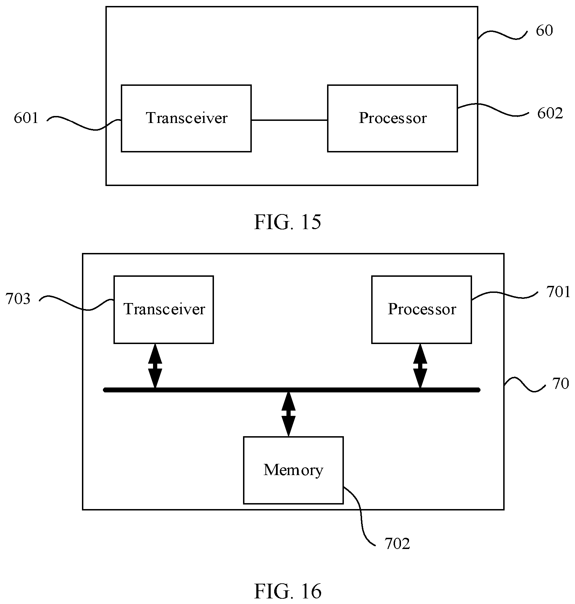

In addition, FIG. 15 is a diagram of a structure of a device 60 according to an embodiment of this application. As shown in FIG. 15, the device 60 shown in FIG. 15 includes a transceiver 601 and a processor 602. The device 60 may be configured to perform the methods in the foregoing embodiments. The device 60 is equivalent to the UE enumerated in the methods, or the device 60 is equivalent to the EES enumerated in the methods, or the device 60 is equivalent to the EAS enumerated in the methods.

It should be noted that, in this embodiment of this application, division into the parts is an example, and is merely a logical function division. During actual implementation, another division manner may be used. Functions in embodiments of this application are integrated into one processor. Alternatively, the transceiver and the processor may exist separately. The integrated device may be implemented in a form of hardware, for example, a chip, or may be implemented in a form of a software functional unit.

In addition, an embodiment of this application further provides a device 70. FIG. 16 is a diagram of a structure of a device 70 according to an embodiment of this application. As shown in FIG. 16, the device 70 may include a processor 701, a memory 702 coupled to the processor 701, and a transceiver 703. The transceiver 703 may include an MR, an LR, a communication interface, an optical module, and the like, and is configured to receive a packet, data information, or the like. The processor 701 may include a central processing unit (central processing unit, CPU), a network processor (network processor, NP), or a combination of a CPU and an NP, and is configured to perform related steps of wake-up signal processing in the device shown in the foregoing embodiments. The processor may alternatively be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof. The processor 701 may be one processor, or may include a plurality of processors. The memory 702 may include a volatile memory (volatile memory), for example, a random-access memory (random-access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 702 may alternatively include a combination of the foregoing types of memories. The memory 702 may be one memory, or may include a plurality of memories, and is configured to store program instructions. In an implementation, the memory 702 stores computer-readable instructions, and the computer-readable instructions include a plurality of software modules, for example, a sending module, a processing module, and a receiving module. After executing each software module, the processor 701 may perform a corresponding operation based on an indication of each software module. In this embodiment, an operation performed by a software module is actually an operation performed by the processor 701 based on the indication of the software module. Optionally, the processor 701 may alternatively store program code or instructions for performing the solutions in embodiments of this application. In this case, the processor 701 does not need to read the program code or the instructions from the memory 702.

The device 70 may be configured to perform the methods in the foregoing embodiments. Specifically, the device 70 may be used as the UE, the EES, or the EAS to perform the methods and to perform the corresponding steps in the foregoing embodiments.

In addition, an embodiment of this application further provides a communication apparatus. The communication apparatus includes a storage medium and a processor connected to the storage medium. The storage medium stores instructions. When the instructions are run by the processor, the processor is configured to implement some or all operations in any method in any one of the foregoing embodiments.

An embodiment of this application further provides a computer-readable storage medium. The computer-readable storage medium stores instructions. When the instructions are run on a processor, some or all operations in any method in any one of the foregoing embodiments are implemented.

An embodiment of this application further provides a computer program product, including a computer program. When the computer program is run on a processor, some or all operations in any method in any one of the foregoing embodiments are implemented.

An embodiment of this application further provides a chip, including an interface circuit and a processor. The interface circuit is connected to the processor. The processor is configured to cause the chip to perform some or all operations in any method in any one of the foregoing embodiments.

An embodiment of this application further provides a chip system, including a processor. The processor is coupled to a memory. The memory is configured to store a program or instructions. When the program or the instructions are executed by the processor, the chip system is caused to implement some or all operations in any method in any one of the foregoing embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this embodiment of this application.

For example, the chip system may be an FPGA, an ASIC, a system on chip (system on chip, SoC), a CPU, an NP, a digital signal processor (digital signal processor, DSP), a microcontroller (micro controller unit, MCU), a programmable controller (programmable logic device, PLD), or another integrated chip.

An embodiment of this application further provides a system, including one or more of the foregoing device, apparatus, computer-readable storage medium, computer program product, chip, or chip system. The system may be used in the scenario shown in FIG. 1 or FIG. 2, but is not limited.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, all or some of the technical solutions in this application may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that may store program code, for example, a USB flash drive, a removable hard disk, a ROM, a RAM, a random access memory, a magnetic disk, or an optical disc.

A person skilled in the art should be aware that in the foregoing one or more examples, the services described in this application may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and the beneficial effects of this application are further described in detail. It should be understood that the foregoing descriptions are merely specific implementations of this application.

The foregoing embodiments are merely used to describe the technical solutions of this application, but not to limit the technical solutions. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, comprising:
determining a first edge application server EAS association group based on first information corresponding to at least one EAS, wherein the at least one EAS comprises an EAS deployed on a satellite, the at least one EAS comprises an EAS in the first EAS association group, and the first information of each EAS deployed on the satellite indicates connection information of the satellite corresponding to the EAS; and
sending the first EAS association group.

2. The method according to claim 1, wherein
the connection information indicates connectivity information of the satellite in terms of time; or
the connection information indicates connectivity information of the satellite in terms of space; or
the connection information indicates connectivity information of the satellite in terms of time and space.

3. The method according to claim 1 or 2, further comprising:
receiving a first request message sent by a first EAS, wherein the at least one EAS comprises the first EAS, and the first request message carries first information of the first EAS; and
obtaining the first information of the first EAS based on the first request message.

4. The method according to claim 1 or 2, further comprising:
receiving a first request message sent by a first EAS, wherein the first EAS is an EAS deployed on a first satellite among the at least one EAS, and the first request message carries at least one of a satellite identifier or connection information of the first satellite;
obtaining a satellite association group, wherein the satellite association group comprises second information corresponding to at least one satellite, the second information indicates at least one of a corresponding satellite identifier or connection information, and the at least one satellite comprises the first satellite; and
determining first information of the first EAS based on the first request message of the first EAS and the second information of the first satellite.

5. The method according to claim 1 or 2, further comprising:
receiving a first request message sent by a first EAS, wherein the first EAS is an EAS deployed on a first satellite among the at least one EAS, and the first request message carries second information of the first satellite; and
determining first information of the first EAS based on the second information of the first satellite.

6. A communication method, comprising:
determining a first edge application server EAS association group based on first information corresponding to at least one EAS, wherein the at least one EAS comprises an EAS deployed on a satellite, the at least one EAS comprises an EAS in the first EAS association group, and the first information of each EAS deployed on the satellite indicates connection information of the satellite corresponding to the EAS;
receiving a second request message, wherein the second request message carries application information;
determining a second EAS association group based on the application information and the first EAS association group; and
sending the second EAS association group.

7. The method according to claim 6, wherein
the application information corresponds to an EAS; and
determining the second EAS association group based on the application information and the first EAS association group, and sending the second EAS association group comprise:
determining the second EAS association group from the first EAS association group based on the EAS corresponding to the application information; and
sending a response message, wherein the response message comprises the second EAS association group.

8. The method according to claim 6, wherein
the second request message further comprises first location information, the first location information comprises at least one piece of location information of the UE, and the at least one piece of location information comprises current location information of the UE or at least one piece of predicted location information of the UE, wherein location information comprises at least one of a location or a time corresponding to the location; and
determining the second EAS association group based on the application information and the first EAS association group comprises:
determining the second EAS association group based on the application information, the first location information, and the first EAS association group.

9. The method according to claim 8, wherein
if the at least one piece of location information comprises a current location of the UE, the response message further indicates, in the second EAS association group, an EAS to be accessed by the UE at the current location; or
if the at least one piece of location information comprises the at least one piece of predicted location information of the UE, and the predicted location information comprises a predicted location and a predicted time corresponding to the predicted location, the response message indicates, in the second EAS association group, an EAS to be accessed by the UE at each predicted location and at the predicted time corresponding to the predicted location.

10. A communication method, comprising:
sending a first request message to an edge enabler server EES.

11. The method according to claim 10, wherein the first request message carries first information of a first EAS, and the first information indicates connection information of a first satellite corresponding to the first EAS.

12. The method according to claim 10, wherein the first request message carries at least one of a satellite identifier or connection information of the first satellite, and a first EAS is deployed on the first satellite.

13. The method according to claim 11 or 12, further comprising:
determining an EES association group associated with the first EAS; and
sending the first request message to at least one EES in the EES association group.

14. A communication method, comprising:
receiving an edge application server EAS association group sent by an edge enabler server EES, wherein the EAS association group comprises a first EAS association group or a second EAS association group.

15. The method according to claim 14, further comprising:
sending a second request message to the EES, wherein the second request message carries application information.

16. The method according to claim 14, further comprising:
sending a second request message to the EES, wherein the second request message carries application information and first location information, the first location information comprises at least one piece of location information of the UE, and the at least one piece of location information comprises current location information of the UE or at least one piece of predicted location information of the UE, wherein location information comprises at least one of a location or a time corresponding to the location.

17. The method according to any one of claims 14 to 16, wherein receiving the edge application server EAS association group sent by the edge enabler server EES comprises:
receiving a response message, wherein the response message carries the first EAS association group; and
the method further comprises:
determining, based on the first EAS association group, the application information of a UE, and first location information of the UE, at least one EAS to be accessed.

18. The method according to any one of claims 14 to 16, wherein receiving the edge application server EAS association group sent by the edge enabler server EES comprises:
receiving a response message, wherein the response message carries the second EAS association group; and
the method further comprises:
determining, based on the second EAS association group and first location information of a UE, at least one EAS to be accessed.

19. The method according to claim 16, wherein receiving the edge application server EAS association group sent by the edge enabler server EES comprises:
receiving a response message, wherein the response message carries the second EAS association group, and indicates, in the second EAS association group, an EAS to be accessed by the UE at a current location.

20. The method according to claim 16, wherein receiving the edge application server EAS association group sent by the edge enabler server EES comprises:
receiving a response message, wherein the response message carries the second EAS association group, and indicates, in the second EAS association group, an EAS to be accessed by the UE at each predicted location and at a predicted time corresponding to the predicted location.

21. A communication apparatus, wherein the communication apparatus comprises a module configured to perform the method according to any one of claims 1 to 5.

22. A communication apparatus, wherein the communication apparatus comprises a module configured to perform the method according to any one of claims 6 to 9.

23. A communication apparatus, wherein the communication apparatus comprises a module configured to perform the method according to any one of claims 10 to 13.

24. A communication apparatus, wherein the communication apparatus comprises a module configured to perform the method according to any one of claims 14 to 20.

25. A communication apparatus, wherein the communication apparatus comprises at least one processor, and the processor is configured to perform the method according to any one of claims 1 to 5, or configured to perform the method according to any one of claims 6 to 9, or configured to perform the method according to any one of claims 10 to 13, or configured to perform the method according to any one of claims 14 to 20.

26. A computer-readable storage medium, wherein the computer-readable storage medium comprises instructions, and when the instructions are run, the method according to any one of claims 1 to 5 is caused to be implemented, or the method according to any one of claims 6 to 9 is caused to be implemented, or the method according to any one of claims 10 to 13 is caused to be implemented, or the method according to any one of claims 14 to 20 is caused to be implemented.

27. A computer program product, wherein the computer program product comprises instructions, and when the instructions are run, the method according to any one of claims 1 to 5 is caused to be implemented, or the method according to any one of claims 6 to 9 is caused to be implemented, or the method according to any one of claims 10 to 13 is caused to be implemented, or the method according to any one of claims 14 to 20 is caused to be implemented.

28. A chip, comprising a port circuit and a processor, wherein the port circuit is connected to the processor, and the processor is configured to cause the chip to perform the method according to any one of claims 1 to 5, or perform the method according to any one of claims 6 to 9, or perform the method according to any one of claims 10 to 13, or perform the method according to any one of claims 14 to 20.

29. A communication system, comprising at least one of the following communication apparatuses:
a communication apparatus for implementing the method according to any one of claims 1 to 5;
a communication apparatus for implementing the method according to any one of claims 6 to 9;
a communication apparatus for implementing the method according to any one of claims 10 to 13; or
a communication apparatus for implementing the method according to any one of claims 14 to 20.
